(19) Europäisches Patentamt
European Patent Office
Office européen des brevets

(11) **EP 4 013 713 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **20756798.3**

(22) Anmeldetag: **07.08.2020**

(51) Internationale Patentklassifikation (IPC):
**B66C 13/06** *(2006.01)* **B66C 13/08** *(2006.01)*

(52) Gemeinsame Patentklassifikation (CPC):
**B66C 13/063; B66C 13/085**

(86) Internationale Anmeldenummer:
**PCT/EP2020/072262**

(87) Internationale Veröffentlichungsnummer:
**WO 2021/037526 (04.03.2021 Gazette 2021/09)**

(54) **KRAN UND VERFAHREN ZUM STEUERN EINES SOLCHEN KRANS**

CRANE AND METHOD FOR CONTROLLING SUCH A CRANE

GRUE ET PROCÉDÉ DE COMMANDE D'UNE TELLE GRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2019 DE 102019122796**

(43) Veröffentlichungstag der Anmeldung:
**22.06.2022 Patentblatt 2022/25**

(73) Patentinhaber: **Liebherr-Werk Biberach GmbH 88400 Biberach an der Riss (DE)**

(72) Erfinder: **ENGLERT, Tobias 88483 Burgrieden (DE)**

(74) Vertreter: **Thoma, Michael Lorenz Seidler Gossel Rechtsanwälte Patentanwälte Partnerschaft mbB Widenmayerstraße 23 80538 München (DE)**

(56) Entgegenhaltungen:
EP-A1- 2 562 125 DE-A1-102017 114 789
JP-A- 2003 312 982

**Beschreibung**

Die vorliegende Erfindung betrifft einen Kran, insbesondere einen Turmdrehkran, mit einem Hubseil, das von einem Ausleger abläuft und einen Lasthaken trägt, an dem eine Last tragende Anschlagmittel angeschlagen sind, einer Bestimmungseinrichtung zum Bestimmen der Position und/oder Pendelbewegungen der Last, Antriebseinrichtungen zum Bewegen von Kranelementen und Verfahren des Lasthakens, sowie einer Steuervorrichtung zum Steuern der Antriebseinrichtungen in Abhängigkeit der bestimmten Lastposition und/oder -pendelbewegungen, sowie ferner ein Verfahren zum Steuern eines solchen Krans, bei dem die Ansteuerung der Antriebseinrichtungen in Abhängigkeit der bestimmten Lastposition und/oder -pendelbewegungen beeinflusst wird.

Um den Lasthaken eines Krans entlang eines Verfahrwegs bzw. zwischen zwei Zielpunkten verfahren zu können, müssen üblicherweise diverse Antriebseinrichtungen betätigt und gesteuert werden.

Bediener von beispielsweise Turmdreh-, Ausleger-, oder Brückenkranen (bzw. Verladebrücken) steuern dabei die Antriebe in der Regel direkt an, so dass es viel Übung und Konzentration erfordert, eine Last schnell an die Abladestelle verfahren und dort sicher absetzen zu können. Insbesondere entstehen durch das Ansteuern des Krans schnell große Pendelschwingungen der Last, die aufgrund der geringen Dämpfung nur sehr langsam abklingen. Dies zu vermeiden, ist manuell sehr schwierig und gelingt auch erfahrenen Kranführern nicht immer bzw. kaum.

Die Komplexität der Pendelbewegungen erhöht sich dabei nochmals, wenn die Last nicht direkt am Lasthaken eingehängt werden kann, sondern über ein Anschlagmittel, beispielsweise in Form eines Seilgeschirrs, eines Zwischengehänges, einer oder mehrerer Ketten, eines ausgedehnten Hubnetzes oder einfach weiterer Seile, vom Lasthaken ein Stück weit beabstandet, herabhängend befestigt wird. Je länger das Anschlagmittel im Verhältnis zur Senktiefe ist und je nach Verhältnis der Lastmasse und der Masse des Lasthakens bzw. der Unterflasche variiert der Einfluss bzw. Anteil der Pendelbewegungen der Last gegenüber dem Lasthaken. Es kommt zu Doppelpendelbewegungen, bei denen der Pendelbewegung des Lasthakens noch die Pendelbewegungen der vom Haken beabstandeten Last bzw. des Anschlagmittels überlagert werden. Durch diese Überlagerung der Pendelbewegungen wird es für den Kranführer noch schwieriger, die Antriebe so zu bedienen, dass die Doppelpendelbewegungen gedämpft werden bzw. gar nicht erst entstehen.

Bei manchen Krantypen kommt hinzu, dass die Kranstruktur in sich selbst nachgiebig ist und selbst schwingen kann, was angesichts diverser Bewegungsachsen vom Kranführer kaum vorhersagbar ist. Beispielsweise bei einem Turmdrehkran, bei dem das Hubseil von einer Laufkatze abläuft, die am Ausleger des Krans verfahrbar ist, muss üblicherweise das Drehwerk, mittels dessen der Turm mit dem darauf vorgesehenen Ausleger bzw. der Ausleger relativ zum Turm um eine aufrechte Drehachse verdreht werden, sowie der Katzantrieb, mittels dessen die Laufkatze entlang des Auslegers verfahren werden kann, und das Hubwerk, mittels dessen das Hubseil verstellt und damit der Lasthaken angehoben und abgesenkt werden kann, jeweils betätigt und gesteuert werden. Bei Kranen mit einem wippbaren Teleskopausleger werden zusätzlich zum Drehwerk, der den Ausleger bzw. den Ausleger tragenden Oberwagen um eine aufrechte Achse verdreht, und zum Hubwerk zum Verstellen des Hubseils, auch der Wippantrieb zum Auf- und Niederwippen des Auslegers sowie der Teleskopierantrieb zum Ein- und Ausfahren der Teleskopschüsse betätigt, ggf. auch ein Wippspitzenantrieb bei Vorhandensein einer Wippspitze am Teleskopausleger. Bei Mischformen solcher Krane und ähnlichen Krantypen, beispielsweise Turmkranen mit wippbarem Ausleger oder Derrick-Kranen mit wippbarem Gegenausleger können jeweils auch weitere Antriebseinrichtungen anzusteuern sein.

Die genannten Antriebseinrichtungen werden hierbei üblicherweise vom Kranführer über entsprechende Bedienelemente beispielsweise in Form von Joysticks, Kippschaltern, Drehknöpfen und Schiebern und dergleichen betätigt und gesteuert, was erfahrungsgemäß viel Gefühl und Erfahrung benötigt, um die Zielpunkte rasch und dennoch sanft ohne größere Pendelbewegungen des Lasthakens anzufahren. Während zwischen den Zielpunkten möglichst rasch gefahren werden soll, um eine hohe Arbeitsleistung zu erzielen, soll am jeweiligen Zielpunkt sanft angehalten werden, ohne dass der Lasthaken mit der daran angeschlagenen Last nachpendelt.

Ein solches Steuern der Antriebseinrichtungen eines Krans ist angesichts der erforderlichen Konzentration für den Kranführer ermüdend, zumal oft immer wiederkehrende Verfahrwege und monotone Aufgaben zu erledigen sind. Zudem kommt es bei nachlassender Konzentration oder auch bei einer nicht ausreichenden Erfahrung mit dem jeweiligen Krantyp zu größeren Pendel- bzw. Doppelpendelbewegungen der aufgenommenen Last und damit zu einem entsprechenden Gefährdungspotenzial, wenn der Kranführer die Bedienhebel bzw. -elemente des Krans nicht feinfühlig genug bedient. In der Praxis entstehen durch das Ansteuern des Krans auch bei erfahrenen Kranführern bisweilen immer wieder schnell große Pendelschwingungen der Last, die nur sehr langsam abklingen.

Um der Problematik unerwünschter Pendelbewegungen zu begegnen, wurde bereits vorgeschlagen, die Steuervorrichtung des Krans mit Pendeldämpfeinrichtungen zu versehen, die mittels Steuerungsbausteinen in die Steuerung eingreifen und das Ansteuern der Antriebseinrichtungen beeinflussen, beispielsweise zu große Beschleunigungen einer Antriebseinrichtung durch zu schnelles oder zu starkes Betätigen des Bedienhebels verhindern oder abschwächen oder bestimmte Verfahrgeschwindigkeiten bei größeren Lasten beschränken oder in ähnlicher Weise in die Verfahrbewegungen auch aktiv eingreifen, um ein zu starkes Pendeln des Lasthakens zu verhindern.

Solche Pendeldämpfungseinrichtungen für Krane sind in verschiedenen Ausführungen bekannt, beispielsweise durch Ansteuerung der Drehwerk-, Wipp- und Laufkatzenantriebe in Abhängigkeit von bestimmten Sensorsignalen, beispielsweise Neigungs- und/oder Gyroskopsignalen. Beispielsweise zeigen die Schriften DE 20 2008 018 260 U1 oder DE 10 2009 032 270 A1 bekannte Lastpendeldämpfungen an Kranen, auf deren Gegenstand insoweit, das heißt hinsichtlich der Grundlagen der Pendeldämpfungseinrichtung, ausdrücklich Bezug genommen wird. Bei der DE 20 2008 018 206 U1 wird beispielsweise mittels einer Gyroskopeinheit der Seilwinkel relativ zur Vertikalen und dessen Änderung in Form der Seilwinkelgeschwindigkeit gemessen, um bei Überschreiten eines Grenzwerts für die Seilwinkelgeschwindigkeit gegenüber der Vertikalen automatisch in die Steuerung einzugreifen.

Weiterhin zeigen die Schriften EP16 28 902 B1, DE 103 24 692 A1, EP25 62 125 B1, US 2013 01 61 279 A, DE100 64 182 A1, oder US 55 26 946 B jeweils Konzepte zur Closed-Loop-Regelung von Kranen, die die Pendeldynamik oder auch die Pendel- und Antriebsdynamik berücksichtigen. Solche Closed-Loop-Regelungen an Kranen mit Berücksichtigung der Pendeldynamik sind auch bereits Gegenstand diverser wissenschaftlicher Publikationen, vgl. bspw. E. Arnold, O. Sawodny, J. Neupert and K. Schneider, "Anti-sway system for boom cranes based on a model predictive control approach", IEEE International Conference Mechatronics and Automation, 2005, Niagara Falls, Ont., Canada, 2005, pp. 1533-1538 Vol. 3., sowie Arnold, E., Neupert, J., Sawodny, O., "Modell-prädiktive Trajektoriengenerierung für flachheitsbasierte Folgeregelungen am Beispiel eines Hafenmobilkrans", at - Automatisierungstechnik, 56(8/2008), oder J. Neupert, E. Arnold, K. Schneider & O. Sawodny, "Tracking and anti-sway control for boom cranes", Control Engineering Practice, 18, pp. 31-44, 2010, doi:10.1016/j.conengprac.2009.08.003.

Ferner zeigt die Schrift JP 2003 312 982 A einen Kran, dessen Lasthaken an einem Hubseil angelenkt ist und ein Lastgeschirr trägt. Mittels eines Neigungssensors wird eine Schrägstellung erfasst, in Abhängigkeit derer dann die Ansteuerung korrigiert werden kann. Dieses Dokument offenbart den Oberbegriff von Anspruch 1.

Einen weiteren Kran, der eine Sensorik zum Erfassen der Schrägstellung des Hubseils besitzt, ist aus der Schrift DE 10 2017 114 789 A1 bekannt.

Ferner wurde auch bereits versucht, Doppelpendelbewegungen zu modellieren, die in der beschriebenen Weise entstehen, wenn die Last vom Lasthaken beabstandet durch ein Anschlagmittel angehängt wird, vgl. Schaper, Ulf et al "A load position observer for cranes with gyroscope measurements" in: Proceedings of the 18th World Congress, the International Federation of Automatic Controll, Milano (Italy), August 28 - September 2, 2011, Seiten 3563 bis 3568. Dabei wird mittels eines Gyroskops der Auslenkwinkel und die Auslenkbeschleunigung des Hubseils gemessen, um anhand des kinematischen Modells des Doppelpendels die Position der am Anschlagmittel herabhängenden Last zu bestimmen. Dies erfordert es jedoch, die Länge des zusätzlichen Anschlagmittels bzw. den Abstand zwischen der Last und dem Haken sowie das Trägheitsmoment der Last und des Anschlagmittels zu kennen. Ohne die zusätzliche Kenntnis der Länge des Anschlagmittels bzw. des Lastabstands vom Haken oder des Trägheitsmoments der Last und des Anschlagmittels bezogen auf den Kranhaken, kann mit diesem Ansatz nicht zuverlässig die Position der Last bzw. deren Auslenkung bestimmt werden.

Grundsätzliches Ziel ist es daher, die Lastposition bzw. deren Doppelpendelbewegungen möglichst präzise zu erfassen bzw. zu bestimmen, um ihnen durch eine Regelung aktiv entgegen wirken zu können. Eine solche Regelung kann einerseits als Assistenzsystem dienen, das es dem Kranführer erlaubt, über die Bediengeräte direkt die Lastbewegung vorzugeben (anstatt der Brücken- oder Laufkatzenbewegung). Durch diese Unterstützung können Arbeitssicherheit und Produktivität erhöht werden. Eine Schwingungsdämpfung ist zudem eine wichtige Voraussetzung für die Vollautomatisierung von Kranbewegungen.

Speziell stellt sich dabei das Problem, dass Systeme zur aktiven Schwingungsdämpfung bislang nicht kostengünstig nachrüstbar oder nicht universell einsetzbar waren. Weitere Nachteile ergeben sich dabei dadurch, dass bekannte Schwingungsdämpfungen bislang recht teuer sind, und in der Regel mögliche Doppelpendelbewegungen, wie sie bei länglichen Anschlagmitteln mit einhergehender Beabstandung der Last vom Lasthaken durch die Überlagerung von Pendelbewegungen des Lasthakens selbst sowie Pendelbewegungen der Last relativ zum Lasthaken entstehen, nur unzureichend berücksichtigt werden.

Hiervon ausgehend liegt der vorliegenden Erfindung die Aufgabe zugrunde, einen verbesserten Kran sowie ein verbessertes Verfahren zu dessen Steuerung zu schaffen, die Nachteile des Standes der Technik vermeiden und letzteren in vorteilhafter Weise weiterbilden. Vorzugsweise soll eine verbesserte Pendeldämpfung bei Turmdreh- und Auslegerkranen oder anderen Kranen erzielt werden, die die Doppelpendelbewegungen bei ausgedehnten Anschlagmitteln und vom Lasthaken beabstandet herabhängenden Lasten besser berücksichtigt.

Erfindungsgemäß wird die genannte Aufgabe durch einen Kran gemäß Anspruch 1 sowie ein Verfahren gemäß Anspruch 12 gelöst. Bevorzugte Ausgestaltungen der Erfindungen sind Gegenstand der abhängigen Ansprüche.

Es wird also vorgeschlagen, eine Pendelerfassung am Anschlagmittel und/oder direkt an der vom Lasthaken beabstandet herabhängenden Last selbst vorzunehmen und die Pendelsensorik am Anschlagmittel und/oder direkt an der vom Lasthaken beabstandet herabhängenden Last mit einer Intertialerfassungseinrichtung zu versehen, die am Anschlagmittel und/oder direkt an der vom Lasthaken beabstandet herabhängenden Last angebracht ist und Beschleunigungs- und Drehratensignale bereitstellt, die translatorische Beschleunigungen und Drehraten des Anschlagmittels und/oder der vom Lasthaken beabstandet herabhängenden Last wiedergeben.

Eine solche am Anschlagmittel und/oder direkt an der vom Lasthaken beabstandet herabhängenden Last angebrachte Inertialmesseinrichtung, die bisweilen auch als IMU bezeichnet wird, kann Beschleunigungs- und Drehratensensormittel zum Bereitstellen von Beschleunigungs- und Drehratensignalen aufweisen, die einerseits translatorische Beschleunigungen entlang verschiedener Raumachsen und andererseits Drehraten bzw. gyroskopische Signale bezüglich verschiedener Raumachsen angeben, umfassen. Als Drehraten können dabei Drehgeschwindigkeiten, grundsätzlich aber auch Drehbeschleunigungen oder auch beides bereitgestellt werden.

Aus den Beschleunigungs- und Drehratensignalen der genannten Inertialmesseinrichtung, die direkt am Anschlagmittel oder der daran befestigten Last angebracht ist, und der Lasthakenposition und/oder -auslenkung bzw. den Messsignalen, die die Lasthakenposition und/oder -auslenkung charakterisieren bzw. identifizieren lassen, kann auf Basis der Dynamik eines Doppelpendels die Lastposition bzw. -auslenkung sehr präzise bestimmt werden.

Die Lasthakenposition und/oder -auslenkung kann in an sich per se bekannter Weise bestimmt werden, beispielsweise durch eine Pendelsensorik, die eine Kamera im Bereich des Ablaufpunkts des Hubseils vom Ausleger aufweist und/oder ein Gyroskop am Hubseil besitzt und/oder eine weitere Inertialmesseinrichtung am Lasthaken umfasst.

Durch die zusätzliche Pendelsensorik am genannten Anschlagmittel und/oder direkt an der Last, die durch das Anschlagmittel vom Lasthaken herabhängt, und deren Inertialmesseinrichtung, die Beschleunigungs- und Drehratensignale der Last bzw. des Anschlagmittels bereitstellt, kann die Lastposition und/oder -auslenkung auch bei Doppelpendelbewegungen präzise bestimmt werden, ohne dass es notwendig wäre, die Länge des Anschlagmittels bzw. den Abstand der Last vom Lasthaken und das Trägheitsmoment der Last und des Anschlagmittels bezogen auf den Kranhaken exakt zu kennen. Dies gestattet es insbesondere, die Lastposition und/oder -auslenkung auch dann exakt zu bestimmen, wenn im Kranbetrieb verschieden schwere Lasten gehoben oder unterschiedlich lange Anschlagmittel verwendet werden bzw. ein Anschlagmittel in unterschiedlicher Länge festgezurrt wird, wie es in der Praxis häufig vorkommt.

Die genannte Inertialmesseinrichtung kann vorteilhafterweise lösbar und/oder werkzeugfrei an der Last und/oder am Anschlagmittel angebracht werden, wobei Befestigungsmittel zum Befestigen der Inertialmesseinrichtung beispielsweise eine Magneteinrichtung oder eine elastische Klemmeinrichtung umfassen können, um die Inertialmesseinrichtung in einfacher Weise an der Last und/oder am Anschlagmittel magnetisch befestigen oder festklemmen zu können. Auch andere Befestigungsmittel wie beispielsweise ein Unterdruck-Saugknopf oder mechanisch betätigbare Spannmittel wie Klemmpratzen können Verwendung finden.

Insbesondere kann auf Basis der Dynamik des Doppelpendels ein Beobachter beispielsweise in Form eines Kalman-Filters, insbesondere eines nichtlinearen bzw. sogenannten "unscented" Kalman-Filters vorgesehen werden, der mit Hilfe von Positions- und Geschwindigkeitssignalen aller Antriebe sowie der Lasthakenposition und/oder -auslenkung bzw. mit Hilfe der Signale der Pendelsensorik, die die Lasthakenposition und/oder -auslenkung identifizieren, und der zusätzlichen Pendelsensorik in Form der Inertialmesseinrichtung an der Last selbst oder an den Anschlagmitteln die Position und/oder Auslenkung der Last zuverlässig und präzise bestimmen kann. Hierbei kann beispielsweise die Länge des Anschlagmittels und/oder die Beabstandung der Last vom Lasthaken und/oder der Auslenkwinkel zwischen dem Anschlagmittel und der Vertikalen geschätzt und daraus die Position der Last berechnet werden

Vorteilhafterweise kann die Inertialmesseinrichtung Beschleunigungen in drei Raumachsen und Drehraten um zumindest zwei Raumachsen erfassen. Die Beschleunigungssensormittel können dreiachsig arbeitend und die Gyroskopsensormittel können zumindest zweiachsig arbeitend ausgebildet sein.

Die am Anschlagmittel und/oder direkt an der vom Lasthaken beabstandet herabhängenden Last angebrachte Inertialmesseinrichtung kann ihre Beschleunigungs- und Drehratensignale und/oder daraus abgeleitete Signale vorteilhafterweise drahtlos an eine Steuer- und/oder Auswerteeinrichtung übermitteln, die an einem Strukturteil des Krans angebracht oder auch separat in Krannähe angeordnet sein kann. Insbesondere kann die Übermittlung an einen Empfänger erfolgen, der an der Laufkatze und/oder an der Aufhängung, von der das Hubseil abläuft, angebracht sein kann. Vorteilhafterweis kann die Übertragung bspw. über eine Bluetooth oder WLAN-Verbindung erfolgen.

Durch eine solche drahtlose Anbindung einer Inertialmesseinrichtung kann eine Pendeldämpfung sehr einfach auch an bestehenden Kranen nachgerüstet werden, ohne dass hierfür komplexe Nachrüstmaßnahmen erforderlich wären. Es ist im Wesentlichen nur die Inertialmesseinrichtung am Anschlagmittel und/oder direkt an der vom Lasthaken beabstandet herabhängenden Last und der damit kommunizierende Empfänger anzubringen, der die Signale an die Steuer- bzw. Reglereinrichtung übermittelt.

Aus den Signalen der Inertialmesseinrichtung kann vorteilhafterweise in einem zwei- oder mehrstufigen Verfahren die Auslenkung der Last bzw. des Anschlagmittels, an dem die Last vom Lasthaken herabhängt, gegenüber der Vertikalen bestimmt werden. Zunächst wird die Verkippung des Anschlagmittels und/oder die Verkippung der Last bspw. mit Hilfe eines Komplementärfilters oder eines Orientierungsfilters siehe bspw. Mahony, R.; Hamel, T. & Pflimlin, J., Nonlinear Complementary Filters on the Special Othogonal Group, IEEE Transactions on Automatic Control, 2008, 53, 1203-1218, oder Madgwick, S. O. H.; Harrison, A. J. L. & Vaidyanathan, R., Estimation of IMU and MARG orientation using a gradient descent algorithm, IEEE International Conference on Rehabilitation Robotics, 2011, 1-7, bestimmt, da diese nicht mit der Auslenkung des Lasthakens gegenüber der Laufkatze bzw. dem Aufhängepunkt und der Auslenkung des Hubseils gegenüber der Vertikalen übereinstimmen müssen, und wird sodann aus der Verkippung des Anschlagmittels und/oder der Last und dessen bzw. deren Beschleunigung die gesuchte Auslenkung des Anschlagmittels bzw. der vom Lasthaken herabhängenden Last gegenüber der Vertikalen bestimmt. Da die Inertialmesseinrichtung am Anschlagmittel und/oder direkt an der vom Lasthaken beabstandet herabhängenden Last befestigt ist, werden die Beschleunigungs- und Drehratensignale sowohl von den Pendelbewegungen des Hubseils auch als von der Dynamik des relativ zum Hubseil verkippenden bzw. pendelnden Anschlagmittels beeinflusst.

Insbesondere kann durch wenige Berechnungsschritte eine genaue Schätzung des Lastpendelwinkels und/oder der Lastposition erfolgen, die dann vom Regler - insbesondere zusammen mit der Lasthakenposition und/oder dem Pendelwinkel des Lasthakens /und/oder des Hubseils - zur aktiven Pendeldämpfung verwendet werden kann.

Vorteilhafterweise wird dabei zunächst die Verkippung des Anschlagmittels und/oder der vom Lasthaken beabstandet herabhängenden Last aus den Signalen der Inertialmesseinrichtung mit Hilfe eines Komplementärfilters bestimmt, der sich die unterschiedlichen Besonderheiten der translatorischen Beschleunigungs-Signale und der gyroskopischen Signale der Inertialmesseinrichtung zunutze macht, wobei alternativ oder zusätzlich aber auch ein Kalman-Filter zum Bestimmen der Verkippung des Anschlagmittels und/oder der vom Lasthaken beabstandet herabhängenden Last aus den Beschleunigungs- und Drehratensignalen verwendet werden kann.

Aus der ermittelten Verkippung des Anschlagmittel und/oder der vom Lasthaken beabstandet herabhängenden Last können sodann die Beschleunigungen und Drehraten der Last bzw. des Anschlagsmittels in intertial Koordinaten bestimmt werden.

Die erstgenannten Bestimmungsmittel können insbesondere einen Komplementärfilter mit einem Hochpass-Filter für das Drehratensignal der Inertialmesseinrichtung und einen Tiefpass-Filter für das Beschleunigungssignal der Inertialmesseinrichtung oder ein daraus abgeleitetes Signal aufweisen, wobei der genannte Komplementärfilter dazu ausgebildet sein kann, eine drehratengestützte Schätzung der Verkippung des Anschlagmittels bzw. der Last, die auf dem hochpassgefilterten Drehratensignal basiert, und eine beschleunigungsgestützte Schätzung der Verkippung des Anschlagmittels bzw. der Last, die auf dem tiefpassgefilterten Beschleunigungssignal basiert, miteinander zu verknüpfen und aus den verknüpften drehraten- und beschleunigungsgestützten Schätzungen der Verkippung des Lastaufnahmemittels die gesuchte Verkippung des Lastaufnahmemittels zu bestimmen.

Die zweitgenannten Bestimmungsmittel zum Bestimmen der Auslenkung des Anschlagmittels bzw. der Last gegenüber der Vertikalen anhand der ermittelten Verkippung des kann eine Filter- und/oder Beobachtereinrichtung aufweisen, die als Eingangsgröße die ermittelte Verkippung des Lastaufnahmemittels berücksichtigt und aus einer Inertialbeschleunigung am Anschlagmittel bzw. der Last die Auslenkung des Anschlagmittels bzw. der Last gegenüber der Vertikalen bestimmt.

Die genannte Filter- und/oder Beobachtereinrichtung kann insbesondere einen Kalman-Filter, insbesondere einen erweiterten oder nichtlinearen, "unscented" Kalman-Filter, umfassen.

Alternativ oder zusätzlich zu einem solchen Kalman-Filter können die zweitgenannten Bestimmungsmittel auch eine Berechnungseinrichtung zum Berechnen der Auslenkung des Hubseils und/oder des Lastaufnahmemittels gegenüber der Vertikalen aus einer statischen Beziehung der Beschleunigungen, insbesondere aus dem Quotienten einer horizontalen Inertialbeschleunigung und der Erdbeschleunigung aufweisen.

Vorteilhafterweise kann auf dem oberen Abschnitt des Doppelpendels, also dem Hubseil und/oder dem daran befestigten Lasthaken eine Pendelsensorik zur Erfassung dieser Komponente der Doppelpendelbewegung zugeordnet sein, um aus Signalen der Pendelsensorik die Auslenkung des Hubseils und/oder des Lasthakens gegenüber der Vertikalen und/oder die Lasthakenposition bestimmen zu können.

Insbesondere kann die Pendelsensorik zum Messen der oberen Komponente der Doppelpendelbewegung eine Gyroskopeinrichtung umfassen, die Auslenkungen des Hubseils messen kann. Eine solche dem Hubseil zugeordnete Gyroskopeinrichtung ist per se bekannt und beispielsweise in dem zuvor genannten Dokument Schaper Ulf et al "A load position observer for cranes with gyroscope measurements" zu entnehmen.

Alternativ oder zusätzlich zu einer solchen Gyroskopeinrichtung kann die Pendelsensorik zum Erfassen der Pendelbewegungen des Lasthakens auch eine Inertialmesseinrichtung am Lasthaken aufweisen, die Beschleunigungs- und Drehratensignale bereitstellt, die einerseits translatorischer Beschleunigungen entlang verschiedener Raumachsen und andererseits Drehraten bzw. gyroskopische Signale bezüglich verschiedener Raumachsen angeben und die translatorischen Beschleunigungen und Drehraten des Lasthakens wiedergeben. Als Drehraten können dabei Drehgeschwindigkeiten, grundsätzlich aber auch Drehbeschleunigungen oder beides bereitgestellt werden.

Die Auswertung der Beschleunigungs- und Drehratensignale der am Lasthaken angebrachten IMU kann grundsätzlich analog zur Auswertung der Beschleunigungs- und Drehratensignale der IMU, die direkt an der Last oder am Anschlagmittel angebracht ist, wie dies zuvor beschrieben wurde, erfolgen.

Die Erfassungseinrichtung für die Positionserfassung des Lasthakens kann vorteilhafterweise auch eine bildgebende Sensorik, beispielsweise eine Kamera umfassen, die vom Aufhängungspunkt des Hubseils, beispielsweise der Laufkatze, im Wesentlichen senkrecht nach unten blickt. Eine Bildauswerteeinrichtung kann in dem von der bildgebenden Sensorik bereitgestellten Bild den Kranhaken identifizieren und dessen Exzentrizität bzw. dessen Verschiebung aus dem Bildzentrum heraus bestimmen, welche ein Maß für die Auslenkung des Kranhakens gegenüber der Vertikalen ist und damit das Lastpendeln charakterisiert. Alternativ oder zusätzlich kann ein gyroskopischer Sensor den Hubseil-Abzugwinkel vom Ausleger und/oder gegenüber der Vertikalen erfassen und dem Kalman-Filter zuführen.

Bei einer gelenkigen Anbindung des Lasthakens an das Hubseil kann die Ausrichtung des Lasthakens der Ausrichtung der Anschlagmittel entsprechen. Dementsprechend kann es ausreichend sein, nur an dem Lasthaken eine Inertialmesseinrichtung anzubringen und auf eine weitere Inertialmesseinrichtung am Anschlagmittel und/oder an der Last zu verzichten, da die Inertialmesseinrichtung am Lasthaken Beschleunigungs- und Drehratensignale bereitstellt, die auch die Auslenkung des Anschlagmittels und der daran angebrachten Last kennzeichnen. In diesem Fall kann mit einer einzelnen Inertialmesseinrichtung am Lasthaken die Position bzw. die Pendelwinkel sowohl der Last als auch des Lasthakens selbst bestimmt werden.

Die Verkippung des Lasthakens und des Anschlagmittels bzw. der untere Pendelwinkel des Doppelpendels kann dabei direkt aus der Schätzung des Orientierungsfilters gewonnen werden, das beispielsweise als ein Komplementärfilter umgesetzt sein kann. In diesem Fall stellen der Auslenkwinkel des Lasthakens und des daran angebrachten Anschlagmittels gegenüber der Vertikalen und die entsprechende Winkelgeschwindigkeit nicht Zustände des Systems dar, sondern stellen Eingänge dar. Dabei kann die Länge des Anschlagmittels über einen Random-Walk-Ansatz geschätzt werden. Alternativ oder zusätzlich kann die Länge des Anschlagmittels dem Beobachter auch von außen und/oder von einem übergeordneten Software-Modul übergeben werden.

Die genannte Pendeldämpfeinrichtung kann bei manueller Betätigung des Krans durch Betätigung entsprechender Bedienelemente wie Joysticks und dergleichen die Eingabebefehle des Kranführers überwachen und bei Bedarf übersteuern, insbesondere in dem Sinne, dass vom Kranführer beispielsweise zu stark vorgegebene Beschleunigungen reduziert werden oder auch Gegenbewegungen automatisch eingeleitet werden, wenn eine vom Kranführer vorgegebene Kranbewegung zu einem Pendeln des Lasthakens geführt hat oder führen würde. Der Reglerbaustein versucht dabei vorteilhafterweise, so nahe wie möglich an den vom Kranführer gewünschten Bewegungen und Bewegungsprofilen zu bleiben, um dem Kranführer ein Gefühl der Kontrolle zu geben, und übersteuert die manuell eingegebenen Stellsignale nur soweit es nötig ist, um die gewünschte Kranbewegung möglichst pendel- und schwingungsfrei auszuführen. Alternativ oder zusätzlich kann mit dem oder den Bedienelementen wie beispielsweise einem oder mehreren Joysticks nicht die Geschwindigkeit der Antriebe, sondern die Geschwindigkeit der Last vorgegeben werden, wobei der Reglerbaustein bzw. die Steuervorrichtung die Kranantriebe so ansteuert, dass die Vorgaben so gut wie möglich umgesetzt werden, die Last aber gleichzeitig nicht zu pendeln beginnt.

Alternativ oder zusätzlich kann die Pendeldämpfungseinrichtung auch bei einer automatisierten Betätigung des Krans eingesetzt werden, bei der die Steuervorrichtung des Krans im Sinne eines Autopiloten das Lastaufnahmemittel des Krans automatisch zwischen zumindest zwei Zielpunkten entlang eines Verfahrwegs verfährt. Bei einem solchen Automatikbetrieb, bei dem ein Verfahrweg-Bestimmungsmodul der Steuervorrichtung einen gewünschten Verfahrweg beispielsweise im Sinne einer Bahnsteuerung bestimmt und ein automatisches Verfahrsteuermodul der Steuervorrichtung die Antriebsregler bzw. Antriebseinrichtungen so ansteuert, dass der Lasthaken entlang des bestimmten Verfahrwegs verfahren wird, kann die Pendeldämpfungseinrichtung in die Ansteuerung der Antriebsregler durch das genannte Verfahrsteuermodul eingreifen, um den Kranhaken pendelfrei zu verfahren bzw. Pendelbewegungen zu dämpfen.

Die Erfindung wird nachfolgend anhand eines bevorzugten Ausführungsbeispiels und zugehöriger Zeichnungen näher erläutert. In den Zeichnungen zeigen:

Fig. 1:   eine schematische Darstellung eines Turmdrehkrans, bei dem von einer an einem Ausleger verfahrbaren Laufkatze ein Hubseil abläuft, an dem ein Lasthaken angelenkt ist, wobei an dem Lasthaken ein Anschlagmittel eingehängt ist, wobei die hierdurch möglichen Doppelpendelbewegungen mit unterschiedlichen Auslenkwinkeln des Hubseils und des Anschlagmittels dargestellt sind,

Fig. 2:   eine schematische Darstellung des Doppelpendels aus Fig. 1 und dessen Anlenkung an einer Kranlaufkatze, wobei die Verfahrbewegungen der Laufkatze, die Längenänderungen des Hubseils und die entstehenden Pendelwinkel eingetragen sind,

Fig. 3:   eine mögliche Verkippung des Lasthakens gegenüber dem Hubseil, und

Fig. 4:   eine schematische Darstellung eines Turmdrehkrans und des Doppelpendels umfassend das Hubseil und das am Lasthaken angelenkte Anschlagmittel, wobei der Lasthaken durch eine gelenkige Verbindung mit dem Hubseil verbunden ist und die Auslenkung des Lasthakens der Auslenkung des Anschlagmittels entspricht.

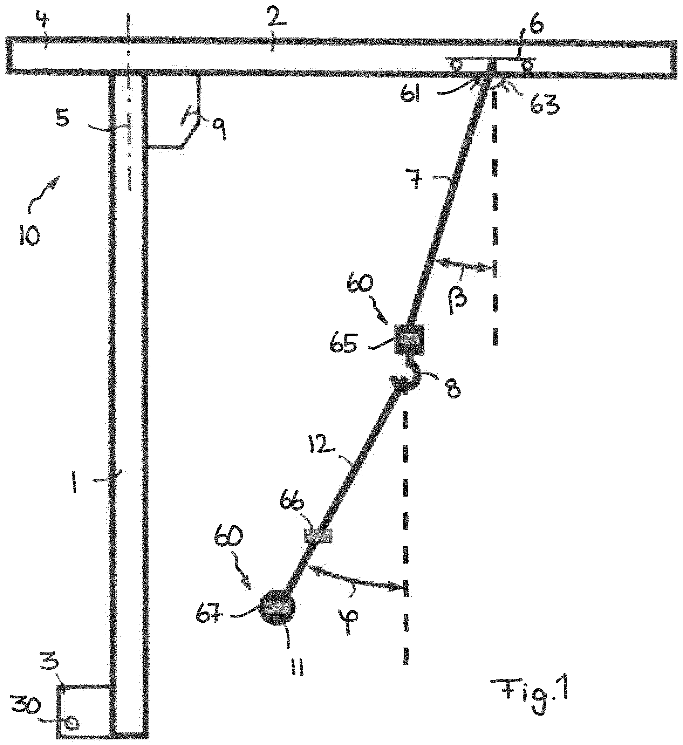

Wie Fig. 1 zeigt, kann der Kran 10 als Turmdrehkran ausgebildet sein. Der in Fig. 1 gezeigte Turmdrehkran kann beispielsweise in an sich bekannter Weise einen Turm 1 aufweisen, der einen Ausleger 2 trägt, der von einem Gegenausleger 4 ausbalanciert wird, an dem ein Gegengewicht vorgesehen sein kann. Der genannte Ausleger 2 kann zusammen mit dem Gegenausleger 4 um eine aufrechte Drehachse 5, die koaxial zur Turmlängsachse sein kann, durch ein Drehwerk verdreht werden. An dem Ausleger 2 kann eine Laufkatze 6 durch einen Katzantrieb verfahren werden, wobei von der Laufkatze 6 ein Hubseil 7 abläuft, an dem ein Lasthaken 8 befestigt ist.

Wie Fig. 1 ebenfalls zeigt, kann der Kran 2 - natürlich auch bei Ausbildung als Brückenkran oder sonstiger Kran - dabei eine elektronische Steuervorrichtung 3 aufweisen, die beispielsweise einen am Kran selbst angeordneten Steuerungsrechner umfassen kann. Die genannte Steuervorrichtung 3 kann hierbei verschiedene Stellglieder, Hydraulikkreise, Elektromotoren, Antriebsvorrichtungen und andere Arbeitsaggregate an der jeweiligen Baumaschine ansteuern. Dies können beispielsweise bei dem gezeigten Kran dessen Hubwerk, dessen Drehwerk, dessen Katzantrieb, dessen -ggf. vorhandener - Ausleger-Wippantrieb oder dergleichen sein.

Die genannte elektronische Steuervorrichtung 3 kann hierbei mit einem Endgerät 9 kommunizieren, das am Steuerstand bzw. in der Führerkabine angeordnet sein kann und beispielsweise die Form eines Tablets mit Touchscreen und/oder Joysticks, Drehknöpfe, Schiebeschalter und ähnliche Bedienelemente aufweisen kann, so dass einerseits verschiedene Informationen vom Steuerungsrechner 3 an dem Endgerät 9 angezeigt und umgekehrt Steuerbefehle über das Endgerät 9 in die Steuervorrichtung 3 eingegeben werden können.

Die genannte Steuervorrichtung 3 des Krans 10 kann insbesondere dazu ausgebildet sein, die genannten Antriebsvorrichtungen des Hubwerks, der Laufkatze und des Drehwerks auch dann anzusteuern, wenn eine Pendeldämpfungseinrichtung 30 pendelrelevante Bewegungsparameter erfasst.

Hierzu kann der Kran 1 eine Pendelsensorik bzw. Erfassungseinrichtung 60 aufweisen, die einen Schrägzug des Hubseils 7 und/oder Auslenkungen des Lasthakens 8 gegenüber einer Vertikalen 62, die durch den Aufhängungspunkt des Lasthakens 8, d.h. die Laufkatze 6 geht, erfasst. Insbesondere kann der Seilzugwinkel $\beta$ gegen die Schwerkraftwirklinie, d.h. die Vertikale 62 erfasst werden, vgl. Fig. 1.

Die Pendelsensorik 60 kann hierzu an der Laufkatze 6 eine Kamera 63 oder eine andere bildgebende Sensorik angebracht sein, die von der Laufkatze 6 senkrecht nach unten blickt, so dass bei unausgelenktem Lasthaken 8 dessen Bildwiedergabe im Zentrum des von der Kamera 63 bereitgestellten Bilds liegt. Wird indes der Lasthaken 8 gegenüber der Vertikalen 62 ausgelenkt, beispielsweise durch ruckhaftes Anfahren der Laufkatze 6 oder abruptes Bremsen des Drehwerks, wandert die Bildwiedergabe des Lasthakens 8 aus dem Zentrum des Kamerabilds heraus, was durch eine Bildauswerteeinrichtung 61 bestimmt werden kann.

Andererseits kann der Schrägzug $\beta$ des Hubseils bzw. die Auslenkung des Lasthakens gegenüber der Vertikalen 62 auch mithilfe einer Inertialmesseinrichtung IMU bewerkstelligt werden, die am Lasthaken 8 angebracht wird und ihre Messsignale vorzugsweise drahtlos zu einem Empfänger an der Laufkatze 6 übermitteln kann, vgl. Fig. 1.

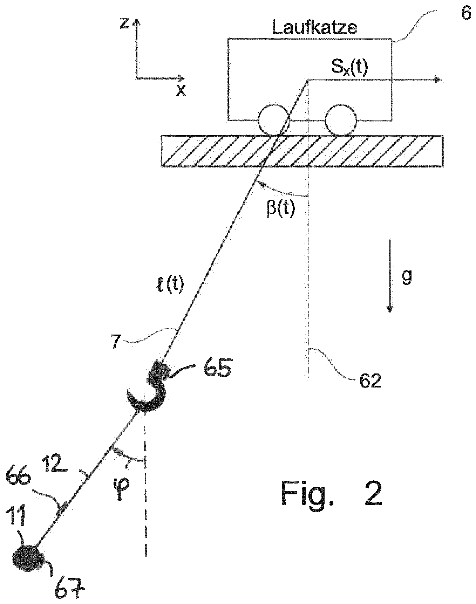

Ferner umfasst die Pendelsensorik 60 zur Erfassung des "unteren" Teils der Doppelpendelbewegungen, genauer gesagt der Pendelbewegungen des Anschlagmittels 12 und der daran befestigten Last 11 gegenüber dem Lasthaken 8 eine zusätzliche Inertialmesseinrichtung IMU, die an dem genannten Anschlagmittel 12 angebracht oder direkt an der Last 11 angebracht sein kann. Die Figuren 1 und 2 zeigen eine zusätzliche Inertialmesseinrichtung 66 am Anschlagmittel 12 und eine weitere Inertialmesseinrichtung 67, die direkt an der Last 11 angebracht ist. Mittels dieser zumindest einen zusätzlichen Inertialmesseinrichtung 66 und 67 kann insbesondere der Auslenkwinkel $\varphi$, der die Auslenkung des Anschlagmittels 12 und der Last 11 gegenüber der Vertikalen 62 und damit gegenüber dem Lasthaken 8 angibt, bestimmt werden.

In Abhängigkeit der erfassten bzw. in der genannten Weise bestimmten Auslenkungen $\beta$ und $\varphi$ gegenüber der Vertikalen 62, insbesondere unter Berücksichtigung der Richtung und Größe der Auslenkungen, kann die Steuervorrichtung 3 mithilfe der Pendeldämpfungseinrichtung 30 den Drehwerksantrieb und den Laufkatzenantrieb ansteuern, um die Laufkatze 6 wieder mehr oder minder exakt über die Last 11 zu bringen und Doppelpendelbewegungen zu kompensieren, bzw. zu reduzieren oder gar nicht erst eintreten zu lassen.

Insbesondere lässt sich auf Basis der Dynamik des Doppelpendels ein Beobachter beispielsweise in Form eines Kalman-Filters, insbesondere eines "unscented" Kalman-Filters, bestimmen, der mit Hilfe der Position des Lasthakens 8 bzw. der Messungen der genannten Sensoren in Form der Kamera 63 und/oder der Inertialmesseinrichtung 65 und der daraus bestimmten Auslenkung $\beta$ einerseits und der zusätzlichen Pendelsensorik in Form der Inertialmesseinrichtung 66 am Anschlagmittel 12 und/oder der Inertialmesseinrichtung 67 an der Last 11 die Position der Last 11 und/oder deren Auslenkung $\varphi$ zuverlässig bestimmen kann. Insbesondere ist es auch möglich, die Länge des Anschlagmittels 12 und damit die Beabstandung der Last 11 vom Lasthaken 8 sowie den Winkel $\varphi$ zwischen der Vertikalen 62 und dem Anschlagmittel 12 zu schätzen und daraus die Position der Last zu berechnen.

Grundlage für den Beobachter stellt die mathematische Beschreibung des Doppelpendels dar. Betrachtet man das in Fig. 2 gezeigte Modell, lässt sich die Doppelpendeldynamik mit Hilfe der Euler-Lagrange-Gleichungen herleiten. Im Folgenden wird der Einfachheit halber lediglich eine Pendelebene und ein Kran ohne Drehwerk bspw. ein Brückenkran betrachtet. Die Herleitung lässt sich jedoch leicht um eine weitere Schwingungsebene und andere Antriebe wie ein Wipp oder Drehwerk erweitern.

Zunächst werden die Laufkatzenposition $s_x(t)$ die Seillänge $l(t)$ sowie der obere und untere Pendelwinkel $\beta(t)$ und $\varphi(t)$ in Abhängigkeit der Zeit $t$ definiert, wobei im Folgenden zur besseren Lesbarkeit die Zeitabhängigkeit nicht mehr eigens durch den Term (t) angegeben wird. Die Position des Hakens

$$r_{\mathrm{H}} = \begin{bmatrix} s_{\mathrm{x}} - l\sin(\beta) \\ -l\cos(\beta) \end{bmatrix} \tag{1}$$

und der Last

$$r_{\mathrm{L}} = r_{\mathrm{H}} + \begin{bmatrix} -l_{\mathrm{A}}\sin(\varphi) \\ l_{\mathrm{A}}\cos(\varphi) \end{bmatrix} \tag{2}$$

sowie die zugehörigen Geschwindigkeiten

$$\dot{r}_{\mathrm{H}} = \begin{bmatrix} \dot{s}_{\mathrm{x}} - \dot{l}\sin(\beta) - l\dot{\beta}\cos(\beta) \\ l\dot{\beta}\sin(\beta) - \dot{l}\cos(\beta) \end{bmatrix} \tag{3}$$

und

$$\dot{r}_{\mathrm{L}} = \begin{bmatrix} \dot{s}_{\mathrm{x}} - \dot{l}\sin(\beta) - l\dot{\beta}\cos(\beta) - \dot{\varphi}l_{\mathrm{A}}\cos(\varphi) \\ l\dot{\beta}\sin(\beta) - \dot{l}\cos(\beta) + \dot{\varphi}l_{\mathrm{A}}\sin(\varphi) \end{bmatrix} \tag{4}$$

lassen sich in Abhängigkeit dieser Variablen definieren. Der Parameter $l_A$ kennzeichnet dabei die Länge des Anschlagsmittels. Je nach Gestaltung des Filters kann dieser Parameter auch online mit geschätzt werden, wie später erläutert wird. Die Beschleunigungen

$$\ddot{r}_{\mathrm{H}} = \begin{bmatrix} \ddot{s}_{\mathrm{x}} - \sin(\beta)\ddot{l} - 2\dot{l}\dot{\beta}\cos(\beta) - \ddot{\beta}\cos(\beta)l + \dot{\beta}^2 l\sin(\beta) \\ -\ddot{l}\cos(\beta) + 2\sin(\beta)\dot{\beta}\dot{l} + \cos(\beta)l\dot{\beta}^2 + \ddot{\beta}l\sin(\beta) \end{bmatrix} \tag{5}$$

und

$$\ddot{r}_{\mathrm{L}} = \begin{bmatrix} \ddot{s}_{\mathrm{x}} - \ddot{\varphi}l_{\mathrm{A}}\cos(\varphi) - \sin(\beta)\ddot{l} - 2\dot{l}\dot{\beta}\cos(\beta) + \dot{\varphi}^2 l_{\mathrm{A}}\sin(\varphi) - \ddot{\beta}\cos(\beta)l + \dot{\beta}^2 l\sin(\beta) \\ -\ddot{l}\cos(\beta) + 2\sin(\beta)\dot{\beta}\dot{l} + \cos(\beta)l\dot{\beta}^2 + l_{\mathrm{A}}\cos(\varphi)\dot{\varphi}^2 + \ddot{\varphi}l_a\sin(\varphi) + \ddot{\beta}l\sin(\beta) \end{bmatrix} \tag{6}$$

werden zwar nicht zur Herleitung der Doppelpendeldynamik benötigt, können aber beim späteren Beobachterentwurf verwendet werden. Mit Hilfe der kinetischen Energie

$$T = \frac{1}{2}m_{\mathrm{H}}\dot{r}_{\mathrm{H}}^{\mathrm{T}}\dot{r}_{\mathrm{H}} + \frac{1}{2}m_{\mathrm{L}}\dot{r}_{\mathrm{L}}^{\mathrm{T}}\dot{r}_{\mathrm{L}} \tag{7}$$

und der potentiellen Energie

$$V = \begin{bmatrix} 0 & g \end{bmatrix}(m_{\mathrm{H}}r_{\mathrm{H}} + m_{\mathrm{L}}r_{\mathrm{L}}) \tag{8}$$

lässt sich über die Lösung der Euler-Lagrange-Gleichung

$$\frac{\mathrm{d}}{\mathrm{d}t}\frac{\partial T}{\partial \dot{q}} - \frac{\partial T}{\partial q} + \frac{\partial V}{\partial q} = 0 \tag{9}$$

die Doppelpendeldynamik mit den generalisierten Koordinaten $q = [\beta, \varphi]^{\mathrm{T}}$ herleiten. Aufgrund des länglichen Ausdrucks wird an dieser Stelle auf eine explizite Angabe der Terme von $\ddot{\beta}$ und $\ddot{\varphi}$ verzichtet. In einem nächsten Schritt lässt sich daraus ein nichtlineares System im Zustandsraum

$$\begin{aligned} \dot{x} &= f(x, u) + w \\ y &= h(x, u) + v \end{aligned} \qquad (10)$$

mit den Zuständen $x = [\beta, \dot{\beta}, \varphi, \dot{\varphi}, l_A]^\mathsf{T}$, den Eingängen $u = [s_x, l, \dot{s}_x, \dot{l}, \ddot{s}_x, \ddot{l}]^\mathsf{T}$, sowie mit dem über die Kovarianzmatrizen Q und R als normalverteilt angenommen Systemrauschen $w = N(0, Q)$ und Messrauschen $v = N(0, R)$ aufstellen. Sind die Beschleunigungen der Laufkatze $\ddot{s}_x$ und des Hubseils $\ddot{l}$ nicht direkt von der Regelung oder über Messungen bzw. Schätzungen als Eingang für den Beobachter vorhanden, so können diese auch über eine PT-1 Approximation bestimmt werden, wie bspw. in WO 2019/007541 ausgeführt wird. Die Ausgänge $y$ hängen von den verfügbaren Sensoren ab. Im Falle von IMUs am Haken (65) und der Last (67) bieten sich bspw. die Beschleunigungen $y = [\ddot{r}_H, \ddot{r}_L]^\mathsf{T}$ an. Im Falle der Kamera (63) und einer IMU (67) bieten sich der über die Kamera bestimmte Hakenpendelwinkel und die Lastbeschleunigung als Ausgang $y = [\beta_H, \ddot{r}_L]^\mathsf{T}$ an. Alternativ oder zusätzlich können auch die Drehratensignale der IMUs in den Ausgängen verwendet werden.

Die Systemdynamik $f$ enthält bei dieser Formulierung neben der Doppelpendeldynamik einen Random Walk-Ansatz für die simultane Schätzung der Länge des Anschlagsmittels mit $\dot{l}_A = 0$. Für dieses System mit den Beschleunigungen des Hakens und der Last in interialen Koordnatenals Messgrößen kann nun ein Standrad-Beobachter entworfen werden. Im nichtlinearen Fall bietet sich bspw. ein unscented oder extended Kalman-Filter an. Je nach System, gewünschter Genauigkeit und vorhandener Rechenleistung kann auch eine vereinfachende Linearisierung in Kombination mit einem linearen Beobachter, bspw. ein einfacher Kalman-Filter, zielführend sein.

Im Folgenden wird beispielhaft das Vorgehen bei einem unscented Kalman-Filter unter Verwendung der Haken- und Lastbeschleunigung als Ausgang $y = [\ddot{r}_H, \ddot{r}_L]^\mathsf{T}$ beschrieben. Zunächst müssen im Zeitschritt k geeignete Sigma-Punkte $\chi = [\chi_0, ..., \chi_{2n}]$ und passende Gewichtungsfaktoren $W = [W_0, ..., W_{2n}]$

$$\begin{aligned} \chi_0(k) &= \hat{x}(k), \quad W_0 = \frac{\kappa}{n+\kappa} \\ \chi_i(k) &= \hat{x}(k) + \left(\sqrt{(n+\kappa)P(k)}\right)_i, \quad W_{i+n} = \frac{1}{2(n+\kappa)} \; ; \; i = (1, ..., n) \\ \chi_{i+n}(k) &= \hat{x}(k) - \left(\sqrt{(n+\kappa)P(k)}\right)_i, \quad W_{i+n} = \frac{1}{2(n+\kappa)} \end{aligned} \qquad (11)$$

mit Hilfe des Erwartungswert $\hat{x}$ des Systemzustands $x$, der Kovarianzmatrix $P$, dem Designparameter $\kappa$ und dem Systemzustand n = 5 bestimmt werden. Die Wurzel der Matrix in Gleichung (11) ist nicht eindeutig definiert und muss über eine Cholesky-Zerlegung bestimmt werden. Je nach Ansatz ist in Gleichung (11) die i-te Spalte oder i-te Zeile zu verwenden. Anschließend werden die Sigma-Punkte des nächsten Abtastschritt $k+1$

$$\chi_i(k + 1|k) = f\big(\chi_i(k), u(k)\big) \qquad (12)$$

durch Anwenden der Systemgleichung (10) prädiziert. Der prädizierte Erwartungswert ergibt sich zu

$$\hat{x}(k + 1|k) = \sum_{i=0}^{2n} W_i \, \chi_i(k + 1|k) \,. \qquad (13)$$

Die Schätzfehlerkovarianzmatrix ergibt sich anschließend mit der Kovarianz des Prozessrauschens Q zu

$$P(k + 1|k) = \sum_{i=0}^{2n} W_i \left(\chi_i(k + 1|k) - \hat{x}(k + 1|k)\right)\left(\chi_i(k + 1|k) - \hat{x}(k + 1|k)\right)^\mathsf{T} Q. \qquad (14)$$

Die neuen Sigma Punkte $\chi_i(k + 1|k)$ und Gewichte $W_i$ können nun über Gleichung (11) unter Nutzung von $P(k + 1|k)$ und $\hat{x}(k + 1|k)$ anstelle von $P(k)$ und $\hat{x}(k)$ bestimmt werden. Die so prädizierten Sigma-Punkte können nun mit Hilfe der Ausgangsgleichung (10) in den Messbereich

$$Z_i(k + 1|k) = h\big(\chi_i(k + 1|k), u(k)\big) \qquad (15)$$

transformiert und dadurch die Messungen über die Bildung des Erwartungswerts

$$\hat{z}(k + 1|k) = \sum_{i=0}^{2n} W_i\, Z_i(k + 1|k) \qquad (16)$$

prädiziert werden. Anschließend erfolgt mit Hilfe der Kovarianzmatrix des Messrauschens R die Bestimmung der Innovationskovarianzmatrix

$$S(k + 1) = \sum_{i=0}^{2n} W_i \left( Z_i(k + 1|k) - \hat{z}(k + 1|k) \right)\left( Z_i(k + 1|k) - \hat{z}(k + 1|k) \right)^{\mathrm{T}} R. \qquad (17)$$

Mit dieser und der Kreuzkorrelationsmatrix

$$T(k + 1) = \sum_{i=0}^{2n} W_i \left( \chi_i(k + 1|k) - \hat{x}(k + 1|k) \right)\left( Z_i(k + 1|k) - \hat{z}(k + 1|k) \right)^{\mathrm{T}} R, \qquad (18)$$

lässt sich die Kalman-Matrix

$$K(k + 1) = T(k + 1)\, S^{-1}(k + 1) \qquad (19)$$

bestimmen und zusammen mit den Messwerten z(k + 1) die Innovation des Erwartungswerts

$$\hat{x}(k + 1|k + 1) = \hat{x}(k + 1|k) + K(k + 1)\, (z(k + 1) - \hat{z}(k + 1|k)) \qquad (20)$$

sowie der Schätzfehlerkovarianz

$$P(k + 1|k + 1) = P(k + 1|k) - K(k + 1)S(k + 1)K(k + 1)^{\mathrm{T}} \qquad (21)$$

durchführen. Mit dem geschätzten Erwartungswert der Zustände $\hat{x}(k + 1|k + 1)$ kann abschließend über die Gleichungen (1) und (2) die Position des Hakens und der Last ermittelt werden.

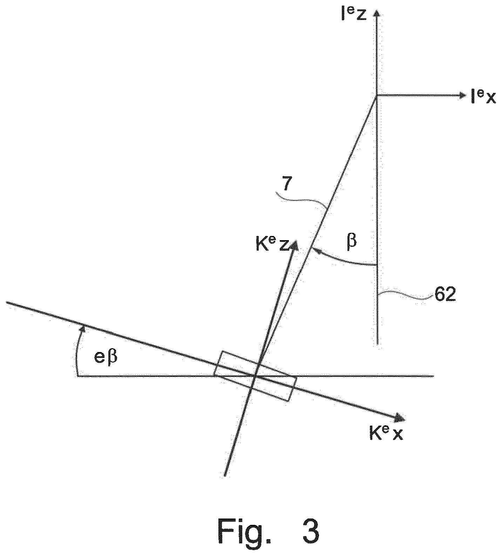

Die in Gleichung (20) verwendeten Messwerten z(k + 1) können wie zu Beginn der Filterbeschreibung erwähnt die Beschleunigungen des Hakens $\ddot{r}_{\mathrm{H}}$ und der Last $\ddot{r}_{\mathrm{L}}$ sein. Im Allgemeinen können allerdings nicht direkt die gemessenen Beschleunigungen der IMUs (65) und (67) verwendet werden, da die IMUs schräg eingebaut, oder der Lasthaken um den Winkel $\varepsilon_\beta$ verkippt sein kann, vgl. Fig. 3. Aus diesem Grund müssen die gemessenen Beschleunigungen in das Inertialsystem transformiert werden. Dazu eignen sich Orientierungsfilter, die als EKF oder Komplementärfilter ausgelegt sein können. Ein Ansatz über einen Komplementärfilter wird bpsw. in WO 2019/007541 beschrieben und hier zur Vollständigkeit nochmals grob skizziert.

Die IMU mißt alle Signale im sich mitbewegenden, mitdrehenden körperfesten Koordinatensystem des Lasthakens, was mit dem Index K gekennzeichnet ist, während Vektoren in inertialen Koordinaten mit *I* gekennzeichnet werden oder auch ganz ohne Index bleiben. Sobald $\varepsilon_\beta$ geschätzt ist, kann die gemessene Beschleunigung $a_K = [a_{K,x},\ a_{K,z}]^T$ in Lasthaken-Koordinaten zu $a_I$ in inertialen Koordinaten tranformiert werden, und zwar unter Verwendung von

$$a_I = \begin{bmatrix} \cos(\epsilon_\beta) & \sin(\epsilon_\beta) \\ -\sin(\epsilon_\beta) & \cos(\epsilon_\beta) \end{bmatrix}^{T} a_K. \qquad (22)$$

Die inertiale Beschleunigung kann dann als Messgröße des Beobachter z bzw. als Ausgang *y* des Systems (10) genutzt werden. An sich könnte die Verkippung anhand eines Modells abgeschätzt werden, das dem einfachen Integrator

$$\dot{\epsilon}_\beta = \omega_\beta \qquad (23)$$

von der gemessenen Drehrate $\omega_\beta$ zum Kippwinkel entspricht. Da bei gyroskopischer Messung der Drehrate bzw. Kippgeschwindigkeit die Gyroskopsignale jedoch einen zeitlich variablen Offset besitzen und von Messrauschen überlagert sind, ist das beschriebene Verfahren nicht zielführend. Vorteilhafterweise kann daher mit einem Orientierungsfilter gearbeitet werden.

Daher wird der Beschleunigungs-Sensor dazu verwendet, einen Referenzwert für den Winkel $\varepsilon_\beta$ bereitzustellen, indem die Erdbeschleunigungskonstante (die im Signal mit niedriger Frequenz auftritt) ausgewertet wird und in inertialen Koordinaten

$$\boldsymbol{g}_I = [0, -g]^\mathrm{T} \qquad (24)$$

bekannt und in Lasthaken-Koordinaten

$$\boldsymbol{g}_K = -g\big[-\sin(\epsilon_\beta)\ \cos(\epsilon_\beta)\,\big]^\mathrm{T} \qquad (25)$$

transformierbar ist. Die gemessene Beschleunigung ergibt sich als Summe von (103) and (112)

$$\boldsymbol{a}_K = \ddot{\boldsymbol{r}}_K - \boldsymbol{g}_K \qquad (26)$$

Das negative Vorzeichen von $\boldsymbol{g}_K$ resultiert dabei aus dem Umstand, dass die Erdbeschleunigung aufgrund des Sensorprinzips als fiktive Aufwärtsbeschleunigung gemessen wird. Da alle Komponenten von $\ddot{\boldsymbol{r}}_K$ generell signifikant kleiner als g sind und um Null oszillieren, erlaubt die Anwendung eines Tiefpass-Filters mit ausreichend niedriger Ausblendfrequenz die Näherung

$$\boldsymbol{a}_K \approx -\boldsymbol{g}_K \qquad (27)$$

Dividiert man die x-Komponente $a_{K,x}$ durch die z-Komponente $a_{K,z}$, erhält man den Referenzkippwinkel für niedrige Frequenzen als

$$\epsilon_\beta = \arctan\left(\frac{a_{K,x}}{a_{K,z}}\right) \qquad (28)$$

Die einfache Struktur der Gleichungen (23) und (28) erlaubt die Verwendung von diversen Filtern, um die Orientierung abzuschätzen. Eine Option ist dabei ein Komplementärfilter, der hinsichtlich seiner Frequenzcharakteristik durch Auswahl der Hochpass- und Tiefpass-Transferfunktionen eingestellt werden kann.

Ein Hochpass-Filtern des Gyroscopsignals $\omega_\beta$ mit $G_\mathrm{hp}(s)$ ergibt die versatzfreie Drehrate $\tilde{\omega}_\beta$ sowie nach Integration eine erste Kippwinkelschätzung $\varepsilon_{\beta,\omega}$. Die weitere Abschätzung $\varepsilon_{\beta,a}$ stammt aus Gleichung (28) auf Basis des Beschleunigungssensors. Insbesondere kann zunächst ein einfacher Hochpass-Filter mit der Übertragungs-funktion

$$G_\mathrm{hp}(s) = \frac{s}{s + \omega_0} \qquad (29)$$

und sehr niedriger Ausblendfrequenz $\omega_0$ auf das Gyroscopesignal $\omega_\beta$ angewendet werden, um den konstanten Messversatz zu eliminieren. Integration ergibt die Gyroskop-basierte Kippwinkel-Schätzung $\varepsilon_{\beta,\omega}$, die für hohe Frequenzen relativgenau ist, jedoch für niedrige Frequenzen relativ ungenau ist. Die grundlegende Idee des Komplementärfilters ist es, $\varepsilon_{\beta,\omega}$ und $\varepsilon_{\beta,a}$ aufzusummieren bzw. miteinander zu verknüpfen, wobei die hohen Frequenzen von $\varepsilon_{\beta,\omega}$ durch Ver-

wendung des Hochpassfilters stärker gewichtet werden und die niedrigen Frequenzen von $\varepsilon_{\beta,a}$ durch die Verwendung des Tiefpassfilters

$$G_{\mathrm{lp}}(s) = \frac{\omega_0}{s + \omega_0} \qquad (30)$$

stärker gewichtet werden, da (28) eine gute Abschätzung für niedrige frequenzen darstellt. Die Übertragungsfunktionen können als einfache Filter erster Ordnung gewählt werden, wobei die Ausblendfrequenz $\omega_0$ niedriger als die Pendelfrequenz gewählt wird. Da

$$G_{\mathrm{hp}}(s) + G_{\mathrm{lp}}(s) = 1 \qquad (31)$$

für alle Frequenzen gilt, wird die Abschätzung von $\varepsilon_\beta$ nicht falsch skaliert.

Auf Basis der geschätzten Lasthaken-Orientierung, kann die inertiale Beschleunigung $a_I$ des Lasthakens aus der Messung von $a_K$ bestimmt werden, und zwar unter Verwendung von (22), was die Gestaltung eines Beobachters auf Basis der Doppelpendeldynamik (10) gestattet sowie die rotierte Beschleunigungsmessung

$$a_I = \ddot{r}_I - g_I \qquad (32)$$

Obwohl beide Komponenten dieser Gleichung gleichermaßen für die Abschätzung des Pendelwinkels hergenommen werden können, können gute Ergebnisse auch nur unter Verwendung der x-Komponente erhalten werden, die unabhängig von g ist.

Die Auswertung der Inertialmesseinrichtung 65 und 66 bzw. 67, die am Anschlagmittel 12 bzw. direkt an der Last 11 angebracht ist, kann in analoger Weise erfolgen, wie dies gerade erläutert wurde. Zur Vermeidung von Wiederholungen darf auf die gerade gemachten Ausführungen verwiesen werden.

Somit lässt sich durch die zusätzliche Inertialmesseinrichtung 66 bzw. 67 am Anschlagmittel 12 bzw. der Last 11 die Position der Last 11 auch bei Doppelpendelbewegungen präzise bestimmen.

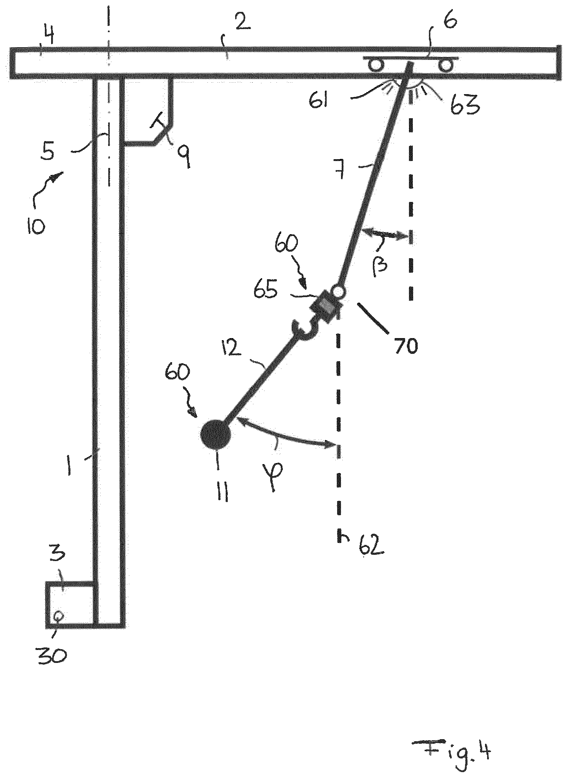

Je nach Krantyp und Ausgestaltung der Unterflasche bzw. des Lasthakens kann die Verbindung zwischen Hubseil und Unterflasche über ein Drehgelenk (70) modelliert und gleichzeitig die Verbindung zwischen dem Lastanschlagmittel und dem Kranhaken als fest angenommen werden, wie Fig. 4 zeigt. In diesem Fall entspricht die Verkippung des Kranhakens $\varepsilon_\beta$ exakt dem unteren Pendelwinkel $\varphi$. Folglich kann bei dieser Konstellation mit einer einzelnen IMU an dem Lasthaken die Position bzw. die Pendelwinkel sowohl des Lasthakens als auch die Länge des Anschlagsmittels und damit die Position bzw. die Pendelwinkel der Last selbst bestimmt werden. Gegebenenfalls muss zusätzlich der Einbauwinkel der IMU berücksichtigt werden, sofern deren Achsen nicht exakt ausgerichtet sind.

Die Verkippung $\varepsilon_\beta$ bzw. der untere Pendelwinkel $\varphi$ folgt direkt aus der Schätzung des Orientierungsfilters, welches bspw. wie erläutert über ein Komplementärfilter umgesetzt sein kann. Mit Blick auf den Beobachter sind in Abhängigkeit der Qualität des Orientierungsfilters zwei Umsetzungen denkbar.

Ist die vom Orientierungsfilter geschätzte Verkippung $\varepsilon_\beta$ ungenau oder verrauscht, bietet es sich an im Beobachter das gesamte Doppelpendelmodell (10) mit den Zuständen $x = [\beta,\dot{\beta},\varphi,\dot{\varphi},l_{\mathrm{A}}]^\mathsf{T}$ zu verwenden. Die Ausgänge des Modells $y = [\ddot{r}_{\mathrm{H}}, \varphi, \dot{\varphi}]^\mathsf{T}$ können in dieser Konstellation neben den Beschleunigungen des Hakens die Verkippung des Hakens $\varepsilon_\beta = \varphi$ sowie die Drehrate des Hakens, welcher der unteren Pendelwinkelgeschwindigkeit entspricht, $\omega_\beta = \dot{\varphi}$ umfassen und dienen als Messgrößen z für den Beobachter.

Ist die Qualität des Orientierungsfilters ausreichend hoch, kann der Beobachter reduziert werden. In diesem Fall reduziert sich der zu schätzende Zustand $x = [\beta,\dot{\beta},l_{\mathrm{A}}]^\mathsf{T}$ auf den oberen Pendelwinkel β, die Pendelwinkelgeschwindigkeit $\dot{\beta}$ sowie die Länge des Anschlagsmittels $l_{\mathrm{A}}$. Der untere Pendelwinkel $\varphi$ und die Winkelgeschwindigkeit $\dot{\varphi}$ sind bei dieser Betrachtung keine Zustände sondern Eingänge des Systems. Diese ergeben sich somit zu $u = [s_x,l,\dot{s}_x, \dot{l},\ddot{s}_x,\ddot{l}, \varphi,\dot{\varphi}]^\mathsf{T}$. Die Ausgänge des Modells $y = [\ddot{r}_{\mathrm{H}}]^\mathsf{T}$ können in dieser Konstellation die Beschleunigungen des Hakens umfassen und dienen als Messgrößen z für den Beobachter. An dieser Stelle sei nochmals vermerkt, dass zusätzlich oder alternativ auch die Drehraten des Hakens im Inertialsystem verwendet werden könnten.

Auch hierbei wird die Länge des Anschlagsmittels über einen Random Walk-Ansatz geschätzt. Alternativ kann die Länge dem Beobachter auch von außen bzw. von einem übergeordneten Softwaremodul oder um Nutzer direkt übergeben werden.

In vorteilhafter Weiterbildung kann der beschriebene Ansatz zur Beschreibung der Doppelpendeldynamik und die aufgezeigten Beobachter mit einem Strukturmodell des Krans, wie bspw. in WO 2019/007541 beschrieben, kombiniert werden. Die so bestimmten Zustände können zur Stabilisierung und zur Unterdrückung unnötiger Pendelbewegungen verwendet werden. Hierzu kann eine nichtlineare Regelung, bspw. eine modellprädiktive Regelung (MPC), entworfen werden. Zur einfacheren Darstellung wird auch hier auf einen Kran mit einer Schwingebene, bspw. ein Brückenkran zurückgegriffen. Das Verfahren lässt sich jedoch leicht um weitere Schwingebenen, bspw. ein Drehwerk, und Strukturelastizitäten erweitern.

Im Sinne einer modellprädiktiven Regelung wird das Verhalten des Krans anhand eines mathematischen Modell über einen gewissen Zeitraum prädiziert und die Stellgrößen derart variiert, dass ein Kostenfunktional J, welches die Regelziele beschreibt, minimiert wird.

Hierfür ist ein mathematisches Modell des Krans nötig. Allerdings muss dieses neben der Pendeldynamik und eventueller Strukturelastizitäten auch die Antriebsdynamik berücksichtigen. Unter der Annahme einer schnellen unterlagerten Drehzahlregelung der Umrichter ergibt sich die Antriebsdynamik für den zur Vereinfachung betrachteten Brückenkran zu

$$f_{\text{cont}}(x, u, l_A) = \begin{bmatrix} \dot{s}_x \\ \ddot{s}_x \\ \dot{l} \\ \ddot{l} \\ \dot{\beta} \\ f_1(x, u, l_A) \\ \dot{\varphi} \\ f_2(x, u, l_A) \end{bmatrix} \tag{33}$$

mit dem Zuständen $x_{\text{des}} = [s_x, \dot{s}_x, l, \dot{l}, \beta, \dot{\beta}, \varphi, \dot{\varphi}]^T$ und den Eingängen $u_{\text{des}} = [\ddot{s}_x, \ddot{l}]^T$. Die Funktionen $f_1(x,u)$ und $f_2(x,u)$ beschreiben die Beschleunigung der Doppelpendelwinkel analog zum System (10). Zusätzlich könnte in (33) auch die Strukturdynamik des Krans berücksichtigt werden.

Eine mögliche Ausgestaltung des Kostenfunktionals

$$J(u; x_k) = \int_0^{T_{hor}} (x - x_{\text{des}})^T Q (x - x_{\text{des}}) + (u - u_{\text{des}})^T R (u - u_{\text{des}}) \, \mathrm{d}t \tag{34}$$

sieht mit $x_{\text{des}} = [\sim, \dot{s}_{x,\text{des}}, \sim, \dot{l}_{\text{des}}, 0,0,0,0]^T$ und $u_{\text{des}} = [0,0]^T$ die Bestrafung der Pendelwinkel, der Pendelwinkelgeschwindigkeiten sowie die Abweichung der Katz- und Hubgeschwindigkeit zu der gewünschten Sollgeschwindigkeiten $\dot{s}_{x,\text{des}}$ und $\dot{l}_{\text{des}}$ in Abhängigkeit der Gewichtungsmatrizen Q und R vor. Die Tilde kennzeichnet dabei, dass für die Katzposition und die Hubseillänge keine Zielwerte vorgegeben sind. Alternativ sind auch andere Formulierung, die bspw. die Abweichung der Last oder Hakengeschwindigkeit von einer Vorgabe bestrafen, denkbar. Auch Formulierungen, welche die Abweichung der Position des Hakens, der Last oder einzelner Antriebe zu einer Zielposition bestrafen, sind umsetzbar. Auf dieser Basis lässt sich das dynamische Optimierungsproblem

$$\begin{aligned} \min_{u(\cdot)} \quad & J(u; x_k, l_A) \\ \text{u. B. v.} \quad & \dot{x} = f_{\text{cont}}(x(t), u(t), l_A), \qquad x(t_k) = x_k \\ & u_{\min} \le u(t) \le u_{\max}, \qquad x_{\min} \le x(t) \le x_{\max} \end{aligned} \tag{35}$$

formulieren. Dieses wird in jedem Abtastschritt über ein numerisches Verfahren, bspw. über gängige Softwaretools wie ACADO oder GRAMPC, gelöst. Der erste Teil der Stellgrößentrajektorie u(t) dient als Eingang und wird nach einer Integration als Sollgeschwindigkeit an die Umrichter der Antriebe weitergegeben. Neben der Systemdynamik ist im Optimierungsproblem (35) direkt die gegebenenfalls zeitlich variablen Beschränkungen der Antriebe in Form von maximalen und minimalen Beschleunigung in den Stellgrößenbeschränkungen $u_{\max} = [\ddot{s}_{x,\max}, \ddot{l}_{\max}]^T$ und $u_{\min} = [\ddot{s}_{x,\min}, \ddot{l}_{\min}]^T$ sowie die maximalen und minimalen Geschwindigkeit und Positionen in den Zustandsbeschränkungen $x_{\min} = [s_{x,\min}, \dot{s}_{x,\min}, l_{\min}, \dot{l}_{\min}, \sim, \sim, \sim, \sim]^T$ und $x_{\max} = [s_{x,\max}, \dot{s}_{x,\max}, l_{\max}, \dot{l}_{\max}, \sim, \sim, \sim, \sim]^T$ enthalten. Dies ist ein besonderer Vorteil der MPC.

Allerdings bringt die MPC einen hohen Rechenaufwand mit sich, sodass alternativ zu einer nichtlinearen Regelung auf Basis einer Linearisierung des Modells (33) auch ein linearer Regler mit Gain-Scheduling bspw. in Form einer linear-quadratischen Regelung (LQR) bestimmt werden. Vorteilhafterweise lässt sich diese Regelung mit einer Trajektoriengenerierung und einer Vorsteuerung zu einer zwei Freiheitsgraderegelung kombinieren, wie bpsw. in WO 2019/007541 für ein Einfachpendel dargestellt ist.

**Patentansprüche**

1. Kran, insbesondere Turmdreh- oder Auslegerkran, mit einem Hubseil (7), das von einem Kranausleger (2) abläuft und einen Lasthaken (8) trägt, wobei an dem Lasthaken (8) ein Anschlagmittel (12) mit einer daran befestigten Last (11) angeschlagen ist, die durch das Anschlagmittel (12) vom Lasthaken (8) beabstandet herabhängt, sowie mit einer Bestimmungseinrichtung (60) zum Bestimmen der Position und/oder Auslenkung der Last (11), und einer elektronischen Steuervorrichtung (3) zum Ansteuern von Antriebseinrichtungen zum Bewegen von Kranelementen und Verfahren des Lasthakens (8) in Abhängigkeit der erfassten Position und/oder Auslenkung der Last (11, wobei die Bestimmungseinrichtung (60) erste Bestimmungsmittel (63; 65) zum Bestimmen einer Position und/oder Auslenkung des Lasthakens (8) aufweist, **dadurch gekennzeichnet, dass** ferner eine an dem Anschlagmittel (12) und/oder der Last (11) angebrachte Inertialmesseinrichtung (66, 67) mit Beschleunigungs- und Drehratensensormitteln zum Bereitstellen von Beschleunigungs- und Drehratensignalen sowie zweite Bestimmungsmittel zum Bestimmen und/oder Schätzen einer Auslenkung und/oder Position der Last (11) aus den Beschleunigungs- und Drehratensignalen der Inertialmesseinrichtung (66, 67), die am Anschlagmittel (12) und/oder an der Last (11) angebracht ist, sowie aus den Signalen der genannten ersten Bestimmungsmittel (63, 65), die die Position und/oder Auslenkung des Lasthakens (8) charakterisieren, aufweist

2. Kran nach dem vorhergehenden Anspruch, wobei die Inertialmesseinrichtung (66, 67) an den Anschlagmitteln (12) und/oder an der Last (11) einen drahtlosen Kommunikationsbaustein zum drahtlosen Übermitteln von Messsignalen und/oder daraus abgeleiteten Signalen an einen Empfänger aufweist, wobei der Kommunikationsbaustein und der Empfänger vorzugsweise über eine Bluetooth- oder WLAN-Verbindung miteinander verbindbar sind und der Empfänger an einer Laufkatze (6) angeordnet ist, von der das Hubseil (7) abläuft.

3. Kran nach einem der vorhergehenden Ansprüche, wobei die Inertialmesseinrichtung (66, 67) an den Anschlagmitteln (12) und/oder an der Last (11) einen Energiespeicher, vorzugsweise in Form eines aufladbaren Akkus, aufweist.

4. Kran nach einem der vorhergehenden Ansprüche, wobei die Inertialmesseinrichtung (66, 67) an den Anschlagmitteln (12) und/oder an der Last (11) lösbare Befestigungsmittel, vorzugsweise in Form einer Magneteinrichtung und/oder einer Klemmeinrichtung, zum lösbaren Befestigen an der Last (11) und/oder an den Anschlagmitteln (12) aufweist.

5. Kran nach einem der vorhergehenden Ansprüche, wobei die Inertialmesseinrichtung fest im Anschlagsmittel (12), bspw. als ein Kettenglied, integriert ist.

6. Kran nach einem der vorhergehenden Ansprüche, wobei die Anschlagmittel (12) zumindest ein Anschlagseil und/oder eine Anschlagkette, umfassen.

7. Kran nach einem der vorhergehenden Ansprüche, wobei die zweiten Bestimmungsmittel eine Filter- und/oder Beobachtereinrichtung aufweisen, die als Eingangsgröße die ermittelte Auslenkung und/oder Verkippung $\varepsilon_{\varphi}$ des Anschlagmittels (12) und/oder Last (11) berücksichtigt und aus einer Inertialbeschleunigung an der Last (11) und/oder den Anschlagmitteln (12) die Auslenkung $\varphi$ der Anschlagmittel (12) und/oder der Last (11) gegenüber der Vertikalen (62) bestimmt, wobei die Filter- und/oder Beobachtereinrichtung einen Kalman-Filter, insbesondere in Form eines erweiterten und/oder unscented Kalman-Filters, umfasst.

8. Kran nach einem der vorhergehenden Ansprüche, wobei die ersten Bestimmungsmittel zum Bestimmen der Position und/oder Auslenkung des Kranhakens (8) eine bildgebende Sensorik, insbesondere eine Kamera (63), aufweist, die im Bereich eines Aufhängepunkts des Hubseils (7), insbesondere an einer Laufkatze (6), im Wesentlichen senkrecht nach unten blickt, wobei eine Bildauswerteeinrichtung (61) zum Auswerten eines von der bildgebenden Sensorik bereitgestellten Bilds hinsichtlich der Position des Lasthakens (8) in dem bereitgestellten Bild und Bestimmung der Auslenkung $\beta$ des Lasthakens (8) und/oder des Hubseils (7) und/oder der Auslenkungsgeschwindigkeit gegenüber der Vertikalen (62) vorgesehen ist.

9. Kran nach einem der vorhergehenden Ansprüche, wobei die ersten Bestimmungsmittel eine Inertialmesseinrichtung (65) umfasst, die an dem Lasthaken (8) angebracht ist und Beschleunigungs- und Drehratensensormittel zum Bereitstellen von Beschleunigungs- und Drehratensignalen aufweist, die eine translatorische Beschleunigung und eine Drehrate des Lasthakens (8) charakterisieren.

**10.** Kran nach einem der vorhergehenden Ansprüche, wobei der Lasthaken (8) mit dem Hubseil (7) gelenkig verbunden ist derart, dass die Auslenkung des Lasthakens (8) der Auslenkung des Anschlagmittels (12) entspricht, wobei an dem Lasthaken (8) eine Inertialmesseinrichtung (65) mit Beschleunigungs- und Drehratensensormitteln zum Bereitstellen von Beschleunigungs- und Drehratensignalen vorgesehen ist und die Bestimmungsmittel dazu ausgebildet sind, aus den Beschleunigungs- und Drehratensignalen der genannten Inertialmesseinrichtung (65) am Lasthaken (8) die Auslenkung und/oder Position der am Anschlagmittel (12) angeschlagenen Last (11) zu bestimmen und/oder zu schätzen.

**11.** Kran nach dem vorhergehenden Anspruch, wobei nur die genannte Inertialmesseinrichtung (65) am Lasthaken (8) vorgesehen ist und das Bestimmen und/oder Schätzen der Auslenkung und/oder Position der am Anschlagmittel (12) angeschlagenen Last (11) ohne Inertialmesseinrichtung am Anschlagmittel (12) und der Last (11) erfolgt, wobei eine Länge des Anschlagmittels (12) geschätzt und/oder über eine externe Schnittstelle eingegeben und/oder übergeben wird, wobei die Auslenkung (φ) der Anschlagmittel (12) und/oder der Last (11) gegenüber der Vertikalen (62) aus der Schätzung eines vorzugsweise als Komplementärfilter ausgebildeten Orientierungsfilters bestimmt wird.

**12.** Verfahren zum Steuern eines Krans, insbesondere eines Turmdreh- oder Auslegerkrans, an dessen an einem Hubseil (7) angebrachten Lasthaken (8) ein Anschlagmittel (12) mit einer daran befestigten Last (11) angeschlagen ist, wobei mittels einer Bestimmungseinrichtung (60) die Position und/oder Auslenkung der Last (11) bestimmt und in Abhängigkeit der bestimmten Lastposition und/oder -auslenkung Antriebseinrichtungen zum Bewegen von Kranelementen durch eine elektronische Steuervorrichtung (3) angesteuert werden, **dadurch gekennzeichnet, dass** mittels ersten Bestimmungsmitteln (63, 65) die Position und/oder Auslenkung des Lasthakens (8) bestimmt wird und mittels zumindest einer an dem Anschlagmittel (12) und/oder an der Last (11) angebrachten Inertialmesseinrichtung (66, 67) mit Beschleunigungs- und Drehratensensormitteln Beschleunigungs- und Drehratensignale, die die translatorischen Beschleunigungen und die Drehraten an dem Anschlagmittel (12) und/oder an der Last (11) angeben, bereitgestellt und drahtlos an die Steuervorrichtung (3) übermittelt werden, wobei eine Position und/oder Auslenkung φ der Last (11) aus den Beschleunigungs- und Drehratensignalen der Inertialmesseinrichtung (66, 67) und der von den ersten Bestimmungsmitteln bestimmten Position und/oder Auslenkung β des Lasthakens (8) bestimmt wird.

**13.** Verfahren nach dem vorhergehenden Anspruch, wobei von einer Filter- und/oder Beobachtereinrichtung, der als Eingangsgröße die ermittelte Auslenkung der Last (11) und/oder des Anschlagmittels (12) zugeführt wird, aus einer Inertialbeschleunigung an der Last (11) und/oder an den Anschlagmitteln (12) die Auslenkung φ der Last (11) und/oder der Anschlagmittel (12) gegenüber der Vertikalen (62) bestimmt wird.

**14.** Verfahren nach einem der beiden vorhergehenden Ansprüche, wobei die Beschleunigungssignale, die die translatorischen Beschleunigungen an der Last (11) und/oder an den Anschlagmitteln (12) angeben, bezüglich dreier Raumachsen bestimmt und die Drehratensignale, die die Drehraten an der Last (11) und/oder den Anschlagmitteln (12) wiedergeben, bezüglich zumindest zweier Raumachsen erfasst werden.

**15.** Verfahren nach einem der drei vorhergehenden Ansprüche, wobei der Lasthaken (8) mit dem Hubseil (7) gelenkig verbunden wird und mit demselben Pendelwinkel (φ) wie das Anschlagmittel (12) gegenüber der Vertikalen (62) ausgelenkt wird, wobei mittels einer an dem Lasthaken (8) angebrachten Inertialmesseinrichtung (65) mit Beschleunigungs- und Drehratensensormitteln Beschleunigungs- und Drehratensignale, die die translatorischen Beschleunigungen und die Drehraten an dem Lasthaken (8) angeben, bereitgestellt und drahtlos an die Steuervorrichtung (3) übermittelt werden, wobei eine Position und/oder Auslenkung (φ) der Anschlagmittel (12) und der Last (11) aus den Beschleunigungs- und Drehratensignalen der Inertialmesseinrichtung (65) am Lasthaken (8) bestimmt wird.

**Claims**

**1.** A crane, in particular a revolving tower crane or boom crane, having a hoisting cable (7) which extends from a crane boom (2) and carries a load hook (8), wherein a sling (12) having a load (11) attached thereto is rigged to the load hook (8), which load hangs down, spaced apart from the load hook (8) by the sling (12), and having a determination device (60) for determining the position and/or deflection of the load (11), and an electronic control apparatus (3) for controlling drive devices for moving crane elements and relocating the load hook (8) according to the detected position and/or deflection of the load (11), wherein the determination device (60) has first determining means (63; 65) for determining a position and/or deflection of the load hook (8), **characterized in that** it furthermore has an inertial measurement device (66, 67) which is attached to the sling (12) and/or the load (11) and which has acceleration and rotation rate sensor means for providing acceleration and rotation rate signals and second determining means for determining and/or estimating a deflection and/or position of the load (11) from the acceleration and rotation rate signals of the inertial measurement device (66, 67), which is attached to the sling (12) and/or to the load (11), and from the signals of the indicated first determining means (63, 65) which characterize the position and/or deflection of the load hook (8).

2. The crane according to the foregoing claim, wherein the inertial measurement device (66, 67) on the sling (12) and/or on the load (11) has a wireless communication module to wirelessly transmit measuring signals and/or signals derived therefrom to a receiver, wherein the communication module and the receiver can preferably be connected to each other via a Bluetooth or WLAN connection and the receiver is arranged on a trolley (6) from which the hoisting cable (7) extends.

3. The crane according to any of the foregoing claims, wherein the inertial measurement device (66, 67) on the sling (12) and/or on the load (11) has an energy accumulator, preferably in the form of a rechargeable battery.

4. The crane according to any of the foregoing claims, wherein the inertial measurement device (66, 67) comprises releasable fastening means, preferably in the form of a magnet device and/or a clamping device, on the sling (12) and/or on the load (11) for releasable fastening to the load (11) and/or to the sling (12).

5. The crane according to any of the foregoing claims, wherein the inertial measurement device is firmly integrated in the sling (12), for example as a chain link.

6. The crane according to any of the foregoing claims, wherein the sling (12) comprises at least one sling rope and/or sling chain.

7. The crane according to any of the foregoing claims, wherein the second determining means comprises a filter and/or observer device which takes into account as input variable the determined deflection and/or tilt $\varepsilon_\varphi$ of the sling (12) and/or the load (11) and determines the deflection $\varphi$ of the sling (12) and/or load (11) relative to the vertical (62) from an inertial acceleration at the load (11) and/or the sling (12), wherein the filter and/or observer device comprises a Kalman filter, in particular in the form of an extended and/or unscented Kalman filter.

8. The crane according to any of the foregoing claims, wherein the first determining means for determining the position and/or deflection of the crane hook (8) comprises an imaging sensor system, in particular a camera (63), which looks down substantially vertically in the region of a suspension point of the hoisting cable (7), in particular on a trolley (6), wherein an image evaluation device (61) is provided for evaluating an image provided by the imaging sensor system with respect to the position of the load hook (8) in the image provided and determining the deflection $\beta$ of the load hook (8) and/or of the hoisting cable (7) and/or the deflection speed with respect to the vertical (62).

9. The crane according to any of the foregoing claims, wherein the first determining means comprises an inertial measurement device (65) mounted on the load hook (8) and having acceleration and rotation rate sensor means for providing acceleration and rotation rate signals characterizing a translational acceleration and a rotation rate of the load hook (8).

10. The crane according to any of the foregoing claims, wherein the load hook (8) is articulated to the hoisting cable (7) in such a way that the deflection of the load hook (8) corresponds to the deflection of the sling (12), wherein an inertial measurement device (65) with acceleration and rotation rate sensor means for providing acceleration and rotation rate signals is provided on the load hook (8) and the determining means are configured to determine and/or estimate the deflection and/or position of the load (11) attached to the sling (12) from the acceleration and rotation rate signals of said inertial measurement device (65) on the load hook (8).

11. The crane according to the foregoing claim, wherein only said inertial measurement device (65) is provided on the load hook (8) and the determination and/or estimation of the deflection and/or position of the load (11) rigged to the sling (12) is performed without an inertial measurement device on the sling (12) and the load (11), wherein a length of the sling (12) is estimated and/or input and/or transferred via an external interface, wherein the deflection ($\varphi$) of the sling (12) and/or the load (11) relative to the vertical (62) is determined from the estimation of an orientation filter preferably configured as a complementary filter.

12. A method for controlling a crane, in particular a revolving tower crane or boom crane, on which load hook (8) attached to a hoisting cable (7) there is rigged a sling (12) with a load (11) attached thereto, wherein by means of a determining device (60) the position and/or deflection of the load (11) is determined and in dependence on the determined load position and/or deflection drive devices for moving crane elements are controlled by an electronic control apparatus (3), **characterized in that** by means of first determining means (63, 65) the position and/or deflection of the load hook (8) is determined and by means of at least one inertial measurement device (66, 67) with acceleration and rotation rate sensor means attached to the sling (12) and/or on the load (11) acceleration and rotation rate signals, which indicate the translational accelerations and the rotation rates at the sling (12) and/or at the load (11) are provided and transmitted wirelessly to the control apparatus (3), wherein a position and/or deflection $\varphi$ of the load (11) is determined from the acceleration and rotation rate signals of the inertial measurement device (66, 67) and the position and/or deflection $\beta$ of the load hook (8) determined by the first determining means.

13. The method according to the foregoing claim, wherein the deflection $\varphi$ of the load (11) and/or of the sling (12) relative to the vertical (62) is determined from an inertial acceleration at the load (11) and/or at the sling (12) by a filter and/or observer device to which the determined deflection of the load (11) and/or of the sling (12) is supplied as an input variable.

14. The method according to one of the two foregoing claims, wherein the acceleration signals indicating the translational accelerations at the load (11) and/or at the sling (12) are determined with respect to three spatial axes and the rotation rate signals indicating the rotation rates at the load (11) and/or the sling (12) are detected with respect to at least two spatial axes.

15. The method according to one of the three foregoing claims, wherein the load hook (8) is articulated to the hoisting cable (7) and is deflected with the same pendulum angle ($\varphi$) as the sling (12) with respect to the vertical (62), wherein by means of an inertial measurement device (65) with acceleration and rotation rate sensor means attached to the load hook (8), acceleration and rotation rate signals, which indicate the translational accelerations and the rotation rates at the load hook (8) are provided and transmitted wirelessly to the control apparatus (3), wherein a position and/or deflection ($\varphi$) of the sling (12) and of the load (11) is determined from the acceleration and rotation rate signals of the inertial measurement device (65) at the load hook (8).

## Revendications

1. Grue, en particulier grue à tour tournante ou grue à flèche, avec un câble de levage (7), qui se déroule depuis une flèche de grue (2) et porte un crochet de levage (8), dans laquelle est accrochée, au crochet de levage (8), une élingue (12) avec une charge (11) fixée sur celle-ci, qui pend vers le bas à distance du crochet de levage (8) par l'élingue (12), ainsi qu'avec un système de définition (60) pour définir la position et/ou la déviation de la charge (11), et un dispositif de commande (3) électronique pour piloter des systèmes d'entraînement destinés à déplacer des éléments de grue et à déplacer le crochet de levage (8) en fonction de la position et/ou de la déviation détectées de la charge (11), dans lequel le système de définition (60) présente des premiers moyens de définition (63 ; 65) pour définir une position et/ou déviation du crochet de levage (8), **caractérisée en ce qu'**en outre un système de mesure inertielle (66, 67) installée sur l'élingue (12) et/ou la charge (11) présente des moyens de détection d'accélération et de vitesse de rotation pour fournir des signaux d'accélération et de vitesse de rotation ainsi que des deuxièmes moyens de définition pour définir et/ou estimer une déviation et/ou une position de la charge (11) à partir des signaux d'accélération et/ou de vitesse de rotation du système de mesure inertielle (66, 67), qui est installé sur l'élingue (12) et/ou sur la charge (11), ainsi qu'à partir des signaux desdits premiers moyens de définition (63, 65), qui caractérisent la position et/ou la déviation du crochet de levage (8).

2. Grue selon la revendication précédente, dans laquelle le système de mesure inertielle (66, 67) présente sur les élingues (12) et/ou sur la charge (11) un module de communication sans fil pour transmettre sans fil des signaux de mesure et/ou des signaux déduits sur cette base à un récepteur, dans laquelle le module de communication et le récepteur peuvent être connectés l'un à l'autre de préférence par l'intermédiaire d'une connexion Bluetooth ou WLAN et le récepteur est disposé sur un chariot roulant (6), depuis lequel le câble de levage (7) se déroule.

3. Grue selon l'une quelconque des revendications précédentes, dans laquelle le système de mesure inertielle (66, 67) sur les élingues (12) et/ou sur la charge (11) présente un accumulateur d'énergie, de préférence sous la forme d'une batterie rechargeable.

4. Grue selon l'une quelconque des revendications précédentes, dans laquelle le système de mesure inertielle (66, 67) sur les élingues (12) et/ou sur la charge (11) présente des moyens de fixation amovibles, de préférence sous la forme d'un système magnétique et/ou d'un système de serrage, destinés à être fixés de manière amovible sur la charge (11) et/ou sur les élingues (12).

5. Grue selon l'une quelconque des revendications précédentes, dans laquelle le système de mesure inertielle est intégré de manière solidaire dans l'élingue (12) ou en tant qu'un maillon.

6. Grue selon l'une quelconque des revendications précédentes, dans laquelle les élingues (12) comprennent au moins un câble d'élingage et/ou une chaîne d'élingage.

7. Grue selon l'une quelconque des revendications précédentes, dans laquelle les deuxièmes moyens de fixation présentent un système de filtrage et/ou d'observation, qui tient compte en tant que grandeur d'entrée de la déviation et/ou du basculement déterminés $\varepsilon\varphi$ de l'élingue (12) et/ou de la charge (11) et qui définit, à partir d'une accélération inertielle sr la charge (11) et/ou les élingues (12), la déviation $\varphi$ des élingues (12) et/ou de la charge (11) par rapport à la verticale (62), dans laquelle le système de filtrage et/ou d'observation comprend un filtre de Kalman, en particulier sous la forme d'un filtre de Kalman étendu et/ou sans parfum.

8. Grue selon l'une quelconque des revendications précédentes, dans laquelle les premiers moyens de définition présentent pour définir la position et/ou la déviation du crochet de levage (8) un équipement de capteur à imagerie, en particulier une caméra (63), qui regarde e manière sensiblement perpendiculaire vers le bas dans la zone d'un point de suspension du câble de levage (7), en particulier sur le chariot roulant (6), dans laquelle est prévu un système d'analyse d'image (61) pour évaluer une image fournie par l'équipement de capteur à imagerie quant à la position du crochet de levage (8) sur l'image fournie et la définition de la déviation ß du crochet de levage (8) et/ou du câble de levage (7) et/ou de la vitesse de déviation par rapport à la verticale (62).

9. Grue selon l'une quelconque des revendications précédentes, dans laquelle les premiers moyens de définition comprennent un système de mesure inertielle (65), qui est installé sur le crochet de levage (8), et des moyens de capteur d'accélération et de vitesse de rotation pour fournir des signaux d'accélération et de vitesse de rotation, qui caractérisent une accélération par translation et une vitesse de rotation du crochet de levage (8).

10. Grue selon l'une quelconque des revendications précédentes, dans laquelle le crochet de levage (8) est connecté de manière articulée au câble de levage (7) de telle manière que la déviation du crochet de levage (8) correspond à la déviation de l'élingue (12), dans laquelle un système de mesure inertielle (65) avec des moyens de capteur d'accélération et de vitesse de rotation pour fournir des signaux d'accélération et de vitesse de rotation est prévu sur le crochet de levage (8) et les moyens de définition sont réalisés pour définir et/ou estimer la déviation et/ou la position de la charge (11) accrochée sur l'élingue (12) à partir des signaux d'accélération et de vitesse de rotation dudit système de mesure inertielle (65) sur le crochet de levage (8).

11. Grue selon la revendication précédente, dans laquelle seul ledit système de mesure inertielle (65) est prévu sur le crochet de levage (8) et la définition et/ou l'estimation de la déviation et/ou de la position de la charge (11) accrochée sur l'élingue (12) sont effectuées sans système de mesure inertielle sur l'élingue (12) et la charge (11), dans laquelle une longueur de l'élingue (12) est estimée et/ou est entrée par l'intermédiaire d'une interface externe et/ou est transmise, dans laquelle la déviation ($\varphi$) des élingues (12) et/ou de la charge (11) par rapport à la verticale (62) est définie à partir de l'estimation d'un filtre d'orientation réalisé de préférence en tant que filtre complémentaire.

12. Procédé pour commander une grue, en particulier une grue à tour tournante ou une grue à flèche, sur le crochet de levage (8) installée sur un câble de levage (7) de laquelle est accrochée une élingue (12) avec une charge (11) fixée sur celle-ci, dans lequel la position et/ou la déviation de la charge (11) sont définies au moyen d'un système de définition (60) et des systèmes d'entraînement pour déplacer des éléments de grue sont pilotés par un dispositif de commande (3) électronique sont pilotés en fonction de la position et/ou de la déviation de charge, **caractérisé en ce que** la position et/ou la déviation du crochet de levage (8) sont définies au moyen de premiers moyens de définition (63, 65) et des signaux d'accélération et de vitesse de rotation, qui indiquent les accélérations par translation et les vitesses de rotation sur l'élingue (12) et/ou sur la charge (11), sont fournis et sont transmis sans fil au dispositif de commande (3) au moyen d'au moins un système de mesure inertielle (66, 67), installée sur l'élingue (12) et/ou sur la charge (11), avec des moyens de capteur d'accélération et de vitesse de rotation, dans lequel une position et/ou une déviation $\varphi$ de la charge (11) sont définies à partir des signaux d'accélération et de vitesse de rotation du système de mesure inertielle (66, 67) et de la position et/ou de la déviation ß, définies par les premiers moyens de définition, du crochet de levage (8).

**13.** Procédé selon la revendication précédente, dans lequel la déviation $\varphi$ de la charge (11) et/ou des élingues (12) par rapport à la verticale (62) est définie à partir d'une accélération inertielle sur la charge (11) et/ou sur les élingues (12) par un système de filtrage et/ou d'observation, auquel la déviation déterminée de la charge (11) et/ou de l'élingue (12) est amenée en tant que grandeur d'entrée.

**14.** Procédé selon l'une quelconque des deux revendications précédentes, dans lequel les signaux d'accélération, qui indiquent les accélérations par translation sur la charge (11) et/ou sur les élingues (12), sont définis par rapport à trois axes spatiaux et les signaux de vitesse de rotation, qui reproduisent les vitesses de rotation sur la charge (11) et/ou les élingues (12), sont détectées par rapport à au moins deux axes spatiaux.

**15.** Procédé selon l'une quelconque des trois revendications précédentes, dans lequel le crochet de levage (8) est connecté de manière articulée au câble de levage (7) et est dévié par rapport à la verticale (62) avec le même angle pendulaire ($\varphi$) que l'élingue (12), dans lequel des signaux d'accélération et de vitesse de rotation, qui indiquent les accélérations par translation et les vitesses de rotation sur le crochet de levage (8), sont fournis et transmis sans fil au dispositif de commande (3) au moyen d'un système de mesure inertielle (65), installé sur le crochet de levage (8), avec des moyens de capteur d'accélération et vitesse de rotation, dans lequel une position et/ou une déviation ($\varphi$) des élingues (12) et de la charge (11) sont définies à partir des signaux d'accélération et de vitesse de rotation du système de mesure inertielle (65) sur le crochet de levage (8).

Fig.1

Fig. 2

Fig. 3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008018260 U1
- DE 102009032270 A1
- DE 202008018206 U1
- EP 1628902 B1
- DE 10324692 A1
- EP 2562125 B1
- US 20130161279 A
- DE 10064182 A1
- US 5526946 B
- JP 2003312982 A
- DE 102017114789 A1
- WO 2019007541 A

**In der Beschreibung aufgeführte Nicht-Patentliteratur**

- **E. ARNOLD ; O. SAWODNY ; J. NEUPERT ; K. SCHNEIDER.** Anti-sway system for boom cranes based on a model predictive control approach. *IEEE International Conference Mechatronics and Automation, 2005, Niagara Falls, Ont., Canada,* 2005, vol. 3, 1533-1538
- **ARNOLD, E. ; NEUPERT, J. ; SAWODNY, O.** Modell-prädiktive Trajektoriengenerierung für flachheitsbasierte Folgeregelungen am Beispiel eines Hafenmobilkrans. *at - Automatisierungstechnik,* August 2008, vol. 56
- **J. NEUPERT ; E. ARNOLD ; K. SCHNEIDER ; O. SAWODNY.** Tracking and anti-sway control for boom cranes. *Control Engineering Practice,* 2010, vol. 18, 31-44
- A load position observer for cranes with gyroscope measurements. **SCHAPER, ULF et al.** Proceedings of the 18th World Congress. International Federation of Automatic Controll, 28. August 2011, 3563-3568
- **MAHONY, R. ; HAMEL, T. ; PFLIMLIN, J.** Nonlinear Complementary Filters on the Special Othogonal Group. *IEEE Transactions on Automatic Control,* 2008, vol. 53, 1203-1218
- **MADGWICK, S. O. H. ; HARRISON, A. J. L. ; VAIDYANATHAN, R.** Estimation of IMU and MARG orientation using a gradient descent algorithm. *IEEE International Conference on Rehabilitation Robotics,* 2011, 1-7
- **SCHAPER ULF et al.** *A load position observer for cranes with gyroscope measurements*